# EUROPÄISCHE PATENTANMELDUNG

(11) **EP 1 927 505 A2**
(43) Veröffentlichungstag der Anmeldung: **04.06.2008**
(21) Anmeldenummer: 07015721.9
(22) Anmeldetag: 09.08.2007
(51) Int. Cl.: B60P 3/07

(54) **Lastzug zum Transport von Fahrzeugen, Zugmaschine und Anhänger hierfür, sowie Verfahren zum Beladen des Anhängers**

(30) Priorität: 01.12.2006 DE 102006056733
(71) Anmelder: Capetola, Franco, 8053 Graz (AT)
(72) Erfinder: Capetola, Franco, 8053 Graz (AT)
(74) Vertreter: nospat Patentanwälte

(57) **Zusammenfassung**

Die Erfindung betrifft eine Zugmaschine (3) zum Transport von Fahrzeugen mit einem Rahmen (2) zumindest einem ersten relativ zum Rahmen verlagerbaren vorderen Pritschenelement (8) und zumindest einem zweiten bezüglich der Zugmaschine ortsfesten Pritschenelement, wobei eine relativ zum Rahmen verlagerbare Heckbühne (9) vorhanden ist, weiche einem Heckrahmenabschnitt (10) der Zugmaschine zugeordnet ist, wobei der Heckrahmenabschnitt in Fahrtrichtung gesehen in einem Bereich hinter einer hintersten (letzten) Achse (5) der Zugmaschine nach unten versetzt angeordnet ist sowie einen Anhänger mit einem Rahmen und zumindest einem relativ zum Rahmen verlagerbaren ersten Pritschenelement zur Aufnahme zumindest eines Rades eines Fahrzeugs, wobei das Pritschenelement an einem in einer Fahrtrichtung vorderen Ende zumindest eines Teleskophubarmes angeordnet ist und der zumindest eine Teleskophubarm mit einem in Fahrtrichtung hinteren Ende um eine Schwenkachse quer zur Fahrtrichtung relativ zum Rahmen schwenkbar angelenkt ist und einen Lastzug mit der Zugmaschine und dem Anhänger sowie ein Beladeverfahren für den Anhänger.

## Beschreibung

Die Erfindung betrifft einen Lastzug zum Transportieren von Fahrzeugen, insbesondere von leichten, mittleren und schweren Nutzfahrzeugen, eine Zugmaschine hierfür nach dem Oberbegriff des Anspruchs 1 sowie einen Anhänger hierfür nach dem Oberbegriff des Anspruchs 20 und ein Verfahren zum Beladen des Anhängers nach dem Oberbegriff des Anspruchs 37.

Die vorliegende Erfindung betrifft einen Lastzug für den Transport von Fahrzeugen, insbesondere von leichten, mittleren und schweren Fahrzeugen, bei dem sowohl der Zugwagen wie auch der Anhänger hydraulisch schwenk- und neigbare wie auch verlängerbare Pritschenelemente besitzen. Diese Pritschenelemente dienen zum einen als Rampe zum Laden der zu transportierenden Fahrzeuge und zum anderen zum Tragen der zu transportierenden Fahrzeuge in angehobener Stellung, wobei ein Zwischenraum zwischen dem oberen zu transportierenden Fahrzeug und einem unteren Pritschenelement entsteht, um ein zweites Fahrzeug oder anderes Ladegut unterzubringen.

Aus dem Stand der Technik sind derartige Lastzüge bekannt, wobei die Pritschenverstellungen zum einen dazu dienen, die Fahrzeuge überhaupt erst laden zu können, zum anderen dafür vorgesehen sind, unterschiedliche Fahrzeuge bezüglich ihrer Abmaße und Gewichte laden zu können.

Aus der DE 280 22 67 ist ein Zugfahrzeug für einen Fahrzeugtransportzug bekannt, bei dem zum einen der Zugfahrzeugrahmen ein Beladeniveau für ein erstes zu transportierendes Fahrzeug vorgibt und zum anderen eine anhebbare Bühne vorhanden ist, auf die ein zweites Fahrzeug geladen werden kann. Eine derartige Zugmaschine weist unerwünschte Einschränkungen hinsichtlich der Variabilität für unterschiedliche, zu transportierende Fahrzeuge auf. Insbesondere ist die maximale Beladehöhe eines derartigen Zugfahrzeuges unerwünscht eingeschränkt.

Weiterhin wird in dieser Druckschrift ein Transportanhänger offenbart, der in der Bauart eines Tridemanhängers mit einer starren Vorderachse und zwei ungelenkten Hinterachsen ausgebildet ist. Der Anhänger weist eine anhebbare Ladebühne auf, welche an ihrem vorderen Ende gelenkig bezüglich des Anhängers gelagert ist und mit ihrem freien hinteren Ende anhebbar ist. Dies hat zur Folge, dass ein auf dieser Bühne angeordnetes, zu transportierendes Fahrzeug, welches zur Einhaltung der maximalen Ladehöhe mit seinem Führerhaus zum Zugfahrzeug nach vorne weisend aufzuladen ist, einen unerwünscht großen Überhang nach vorne bildet. Dieser Überhang entsteht durch ein schwenkendes Kippen des zu transportierenden Fahrzeuges, wodurch das Führerhaus sehr stark nach vorne gekippt wird. Ein hinteres zu transportierendes Fahrzeug ruht auf Rahmenelementen und ist zumindest teilweise unterhalb der Schwenkbühne des Anhängers angeordnet. Zum einen ist der offenbarte Anhänger kompliziert im Aufbau und relativ teuer in der Herstellung. Zum anderen verfügt er nicht über die erforderliche Variabilität der Beladung. Insbesondere ist der nach vorne weisende Überhang eines zu transportierenden Fahrzeuges bei verschwenkter Hubbühne unerwünscht. Derartige Fahrzeugtransportzüge können die heutigen zu transportierenden Fahrzeuge bezüglich Ihrer Abmaße und Gewichte nicht mehr wirtschaftlich und gesetzeskonform, insbesondere was die gesetzliche Zuggesamtlänge, die Gesamthöhe und das gesetzlich zugelassene Zuggesamtgewicht betrifft, transportieren.

Aufgabe der vorliegenden Erfindung ist es, einen Lastzug zum Transportieren von Fahrzeugen, insbesondere von leichten, mittleren und schweren Nutzfahrzeugen sowie eine Zugmaschine und einen Anhänger hierfür anzugeben, bei dem ein vereinfachtes Be- und Entladen ermöglicht ist. Außerdem soll eine Optimierung der Ausnutzung des zur Verfügung stehenden Laderaums, insbesondere hinsichtlich des Höhenmaßes und der Zuggesamtlänge erreicht werden. Insbesondere soll ein Anhänger für einen derartigen Lastzug angegeben werden, bei dem auch schwere und hohe Nutzfahrzeuge sowohl auf einer verlagerbaren Pritsche als auch auf einer anhängerfesten Pritsche transportiert werden können. Insbesondere ist es eine Aufgabe der Erfindung, einen Lastzug anzugeben, der - ohne die gesetzlich vorgeschriebenen Maximalzuglängen zu überschreiten - zwar eine verlängerbare Deichsel besitzt, diese aber während des Transports nicht ausgefahren werden muss. Die teleskopierbare Deichsel soll lediglich das Beladen erleichtern.

Weiterhin ist es Aufgabe der Erfindung, ein Verfahren zum Beladen eines Anhängers mit leichten, mittleren und schweren Nutzfahrzeugen anzugeben, welche ein besonders einfaches be-und entladen sowie eine besonders optimierte Schachtelung des Ladeguts und Ausnutzung des zur Verfügung stehenden Ladevolumens gewährleistet.

Diese Aufgaben werden mit einer Zugmaschine mit den Merkmalen des Anspruchs 1, einem Anhänger mit den Merkmalen des Anspruchs 20 und einem Lastzug mit den Merkmalen des Anspruchs 36 sowie einem Beladeverfahren mit den Merkmalen des Anspruchs 37 gelöst. In den jeweils von den unabhängigen Ansprüchen abhängigen Ansprüchen sind vorteilhafte Ausführungsformen der Zugmaschine und des Anhängers angeben.

Hinsichtlich der Zugmaschine wird vorgeschlagen, eine relativ zu einem Rahmen der Zugmaschine verlagerbare Heckbühne vorzusehen, welche einem Heckrahmenabschnitt der Zugmaschine zugeordnet ist, wobei der Heckrahmenabschnitt in Fahrtrichtung der Zugmaschine gesehen in einem Bereich hinter der hintersten Radachse der Zugmaschine nach unten versetzt angeordnet ist. Hierdurch gelingt es, im Heckbereich der Zugmaschine zusätzliche Variabilität zu schaffen und außerdem ein durch das abgesenkte Niveau des Rahmens ein erleichtertes Beladen der Zugmaschine sicherzustellen. Dadurch, dass der Heckbereich des Rahmens abgesenkt angeordnet ist, gelingt es, eine Anhängerkupplung am Endbereich des Rahmens stirnseitig anzuordnen, so dass es nicht mehr erforderlich ist, dass eine Deichsel eines Transportanhängers den Heckbereich der Zugmaschine untergreifen muss. Somit stellt die Kombination dieser Merkmale zusätzlichen Laderaum, insbesondere in der Hochrichtung zur Verfügung, der auch bei Verwendung eines Anhängers nicht unerwünscht eingeschränkt wird.

Besonders bewährt hat sich, die Heckbühne an ihrem in Fahrtrichtung nach vorne weisenden Ende relativ zur Zugmaschine linear, insbesondere vertikal linear verlagerbar auszugestalten. Hierdurch kann in einfacher Art und Weise mit geringem mechanischen Aufwand das Vertikalniveau der Heckbühne variiert werden. Besonders vorteilhaft ist es, im vorderen Bereich der Heckbühne diese um eine Achse parallel zu einer Fahrzeugquerrichtung der Zugmaschine schwenkbar anzuordnen, wodurch zusätzliche Variabilität der Anordnung der Heckbühne entsteht. Insbesondere eine Kombination von linearer und schwenkbarer Verlagerbarkeit der Heckbühne macht es möglich, die Heckbühne im Wesentlichen fluchtend zu einem vorderen Pritschenelement der Zugmaschine anzuordnen und somit eine Ladefläche zu erzeugen, die etwa in einer gemeinsamen Ebene liegt.

Besonders vorteilhaft ist es, dass ein hinteres Ende der Heckbühne ein hinteres Ende des Heckrahmenabschnitts der Zugmaschine nicht oder nur unwesentlich überragt. Hierdurch gelingt es, eine Anhängerkupplung an einem hintersten freien Ende der Zugmaschine zu montieren, so dass ein Untergreifen eines hinteren Rahmenabschnitts der Zugmaschine durch eine Deichsel eines Anhängers vermeidbar ist.

Weiterhin ist es vorteilhaft, die Heckbühne hinsichtlich ihrer Verlagerbarkeit derart auszulegen, dass sie in einer obersten horizontalen Stellung in etwa mit dem fahrzeugfesten Pritschenelement der Zugmaschine in einer Fahrzeuglängsrichtung fluchtet und so mit dieser eine gemeinsame Ladeebene bilden kann.

Um den zur Verfügung stehenden Laderaum in Hochrichtung im Heckbereich der Zugmaschine maximal ausnutzen zu können, empfiehlt es sich, die Heckbühne in einer vertikal untersten horizontalen Stellung derart anzuordnen, dass diese in einer Seitenansicht auf die Zugmaschine auf dem nach unten versetzt angeordneten Heckrahmenabschnitt aufliegt. Insbesondere ist es sinnvoll, den Heckrahmenabschnitt in einer Draufsicht auf das Fahrzeug so schmal auszubilden, dass die Heckbühnen links und rechts seitlich vom Rahmen angeordnet werden können und am Heckrahmenabschnitt vorbei bis auf das Straßenniveau abgesenkt werden können. Hierdurch ist ein erleichtertes Beladen möglich, die Heckbühne wirkt hierbei bereits als Auffahrrampe.

Weiterhin ist es besonders vorteilhaft, als Einrichtung zum linearen Verlagern des vorderen Endes der Heckbühne einen Hydraulikzylinder oder eine Spindelhubeinrichtung vorzusehen. Diese Einrichtungen benötigen in Fahrzeuglängsrichtung wenig Platz und können hierbei große Kräfte übertragen. Hierdurch kann der beengte Bauraum in diesem Bereich der Zugmaschine optimal genutzt werden.

Als Antriebseinrichtung zum Verschwenken der Heckbühne hat sich ein Hydraulikzylinder besonders bewährt, da dieser in weiten Grenzen längenanpassbar ist und somit einen weiten Schwenkbereich der Heckbühne sicherstellt.

Hinsichtlich des vorderen Pritschenelements hat es sich besonders bewährt, das vordere Pritschenelement an seinem in Fahrtrichtung vorderen Ende mittels einer Spindelhubeinrichtung oder Hydraulikhubeinrichtung, z. B. Spindelhubtürmen vertikal relativ zur Zugmaschine verlagerbar anzubinden. In diesem Bereich ist es zweckmäßig, eine Gelenkeinrichtung mit einer Schwenkachse, die etwa quer zur Zugmaschinenquerrichtung verläuft, vorzusehen, so dass das vordere Pritschenelement an seinem vorderen Ende vertikal auf- und abbewegbar und um dieses vordere Ende auf- und abschwenkbar ist. Das vordere Pritschenelement weist ein nach hinten weisendes freies Ende auf, in dessen Bereich das vordere Pritschenelement mittels geeigneter Hubzylinder, z. B. Hydraulikzylinder gegen den Fahrzeugrahmen der Zugmaschine abgestützt ist.

Besonders vorteilhaft ist es, das vordere Pritschenelement zumindest einseitig mit einer Aushubpritsche zu versehen, welche eine Variabilität des vorderen Pritschenelements hinsichtlich seiner Längserstreckung bietet. Hierdurch kann in einfacher Art und Weise die Ladelänge des vorderen Pritschenelements angepasst werden.

In besonders vorteilhafter Weise ragt eine vordere Aushubpritsche in vollständig ausgefahrener Stellung, bei angehobenem vorderen Pritschenelement sogar ein Stück über das Fahrerhaus, so dass die Ladefläche der angehobenen vorderen Pritsche bis über das Fahrerhaus verlängert ist.

Zur erleichterten Beladung der Zugmaschine hat es sich bewährt, das vordere verlagerbare Pritschenelement in einer vollständig abgesenkten Stellung in etwa auf dem Niveau des fahrzeugfesten Pritschenelements anzuordnen. Hierdurch ist ein erleichtertes Befahren des beweglichen vorderen Pritschenelements möglich.

Außerdem ist es vorteilhaft, das vordere Pritschenelement und die hintere Heckbühne unabhängig voneinander verlagern zu können, damit eine maximale Variabilität der Anordnung der Pritschenelemente zueinander sichergestellt ist.

Hinsichtlich des Anhängers werden die erfindungsgemäß zu lösenden Aufgaben dadurch gelöst, dass ein verlagerbares erstes Pritschenelement vorgesehen ist, welches zur Aufnahme zumindest eines Rades eines zu transportierenden Fahrzeuges dient, wobei das Pritschenelement an einem in einer Fahrtrichtung vorderen Ende zumindest eines Teleskophubarmes angeordnet ist und der zumindest einen Teleskophubarm mit einem in Fahrtrichtung hinteren Ende um eine Schwenkachse quer zur Anhängerlängsrichtung, relativ zum Rahmen schwenkbar angelenkt ist. Grundgedanke der Erfindung ist es hierbei, dass im Bereich des Anhängers des Lastzuges nur eine relativ kleine anhebbare, also verlagerbare Fläche relativ zum Anhänger geschaffen werden muss, um ein Fahrzeug in angehobener Position zu transportieren. Durch das Vorsehen einer relativ kleinen anhebbaren Fläche in Kombination mit einem schwenkbar gelagerten Teleskophubarm entsteht eine sehr Variabilität, da im abgesenkten Zustand zum einen eine vollständig befahrbare Laderampe auf dem Anhänger gebildet wird und durch das Anheben der Pritsche zusammen mit dem Teleskophubarm eine ausreichend große Ladefläche für ein zweites Fahrzeug auf dem Anhänger freigegeben wird. Die erfindungsgemäß gewählte Lösung zeichnet sich durch geringen Bauraumaufwand aus und kann eine hohe Variabilität sowohl hinsichtlich der Hubhöhe als auch hinsichtlich der Positionierung des anhebbaren Pritschenelements in Anhängerlängsrichtung gewährleisten. Hierdurch kann eine Vielzahl unterschiedlicher Nutzfahrzeuge, beispielsweise mit unterschiedlichen Radständen, unterschiedlicher heckseitigen Überhänge und unterschiedlicher Aufbaugeometrien optimal auf den Anhänger positioniert werden.

Als besonders vorteilhaft hat es sich erwiesen, den Teleskophubarm in einer Fahrtrichtung des Anhängers gesehen, hinter der hintersten Achse, insbesondere in etwa auf eine vertikalen Höhe zwischen eine Rahmenoberseite und der Radachsen des Anhängers gelenkig anzuordnen. Als Antriebseinrichtung zum Schwenken des Teleskophubarms hat sich ein Hydraulikzylinder bewährt, da dieser insbesondere mit wenig Bauraum leicht in die Anhängerstruktur integrierbar ist.

Außerdem ist es vorteilhaft, den Teleskophubarm mit einem Teleskopaußenrohr und einem Teleskopinnenrohr auszubilden, welche zueinander linear verlagerbar sind, wobei am freien Ende des Teleskopinnenrohrs die Pritsche angelenkt ist und das freie hintere Ende des Teleskopaußenrohrs gelenkig am Anhänger angelenkt ist.

Besonders vorteilhaft ist es, das Pritschenelement des Anhängers gelenkig am Teleskopinnenrohr anzubinden.

Um Vibrationen und Lastschwankungen beim Transport von Fahrzeugen mit einem beladenen Anhänger vom Hydraulikzylinder zum Schwenken des Teleskophubarmes fernzuhalten, ist es empfehlenswert, eine mechanisch formschlüssige Stützeinrichtung vorzusehen, welche es ermöglicht, den Teleskophubarm in einer Vielzahl von angehobenen Stellungen mechanisch formschlüssig fest bezüglich des Anhängers, beispielsweise durch einen Querstift festzulegen.

Weiterhin hat es sich als vorteilhaft erwiesen, zumindest zwei Radachsen des Anhängers in Fahrzeuglängsrichtung derart weit voneinander beabstandet anzuordnen, dass zwischen den Radachsen eine Mulde zur Aufnahme zumindest eines weiteren Rades eines weiteren zu transportierenden Fahrzeugs gebildet wird. Hierdurch wird das Ladevolumen in Hochrichtung maximal ausgenutzt, da das zweite zu transportierende Fahrzeug im Bereich der Mulde in Hochrichtung möglichst tief unten angeordnet werden kann.

Damit der Anhänger in einfacher Art und Weise von zu transportierenden Fahrzeugen befahren werden kann, ist es sinnvoll und zweckmäßig, dass das zumindest eine Pritschenelement und der Teleskophubarm in einer vollständig abgesenkten Stellung die Oberseiten von Anhängerrädern zumindest teilweise überkragt, so dass der Bereich oberhalb der Anhängerräder von einem zu transportierenden Fahrzeug befahrbar ist. Insbesondere ist es zweckmäßig, dass das abgesenkte Pritschenelement die Mulde zwischen den weiter beabstandeten Anhängerradachsen überdeckt. Hierdurch gelingt es, eine durchgehende einfach und sicher zu befahrende Laderampe zum Beladen des Anhängers zur Verfügung zu stellen.

Weiterhin ist es vorteilhaft, ein zweites verlagerbares Pritschenelement am Anhänger vorzusehen, welches mit einem in Fahrtrichtung des Anhängers hinteren Ende um eine dritte Schwenkachse schwenkbar relativ zum Rahmen des Anhängers gelagert ist und sich von diesem Ende in Fahrtrichtung nach vorne erstreckt. Zweckmäßigerweise ist das zweite verlagerbare Pritschenelement um die dritte Schwenkachse, die bevorzugt in Längsrichtung vor der vordersten Anhängerachse liegt verschwenkbar angeordnet, damit eine hohe Variabilität hinsichtlich eines vorderen Laderampenverlaufs auf dem Anhänger erzielbar ist. Insbesondere gelingt es durch eine in einer abgesenkten Stellung des zweiten Pritschenelements entgegen ansteigenden Verlauf der Fahrtrichtung eine befahrbare Rampe zu bilden, welche von einem abgesenkten vorderen Rahmenniveau des Anhängers zu einem angehobenen Niveau bis fast oberhalb der Anhängerräder ansteigend ausgebildet ist.

Bevorzugt weist der Anhänger eine Deichsel mit einem Kupplungselement zum Kuppeln des Anhängers an eine Zugmaschine auf, wobei die Deichsel tiefliegend angeordnet ist und im angekuppelten Zustand in etwa mit dem abgesenkten Heckrahmenbereich einer Zugmaschine fluchtet. Hierdurch ist ein erhöhtes Ladevolumen in Fahrzeughochrichtung gewährleistet.

Zweckmäßigerweise besitzt der Anhänger an seinem heckseitigen Ende eine Auffahrrampe, welche schwenkbar am Anhänger angeordnet ist und aus einer im Wesentlichen horizontalen Beladestellung in eine im Wesentlichen vertikale Verstaustellung schwenkbar ist. Hierdurch wird ein erleichtertes Beladen des Anhängers von seiner Heckseite her gewährleistet.

Gleichwohl ist sowohl der Anhänger heckseitig sowie von der Stirnseite her be- und entladbar. Im Unterschied zu Lastzügen aus dem Stand der Technik ist der Motorwagen, d. h. die Zugmaschine auch ohne angehängtem Anhänger be- und entladbar, was eine erhebliche Erleichterung für den Fahrer bedeutet. Vorteilhaft an dieser Konstruktion ist, das Beschädigungen des Ladeguts verringert und die Sicherheit des Beladepersonals erhöht ist. Darüber hinaus wird eine Kostenreduzierung des Transportverlaufs erreicht, da im Gegensatz zu herkömmlichen Lastzügen ein Überfahren über den Anhänger, um die Zugmaschine zu beladen nicht zwingend notwendig ist. Hierdurch wird auch der Zustellverkehr erheblich erleichtert und aufgrund der unterschiedlichen Mautsituationen in den einzelnen Ländern können erhebliche Kosteneinsparungen erreicht werden.

Besonders vorteilhaft ist es, das erste Pritschenelement und den Teleskophubarm, das zweite Pritschenelement sowie die Laderampe in ihrer abgesenkten Stellung derart anzuordnen, dass zusammen mit dem Anhängerrahmen (bzw. dessen befahrbaren Teil) oder mit festen Pritschenelementen des Anhängers eine in einer Seitenansicht auf den Anhänger durchgehend befahrbare Laderampe gebildet ist.

Ein Lastzug, gebildet aus einer erfindungsgemäßen Zugmaschine und einem erfindungsgemäßen Anhänger, erfüllt die gestiegenen Anforderungen hinsichtlich der Variabilität der Beladung und der Bauraumausnutzung, insbesondere in Hochrichtung. Weiterhin gewährleistet ein solcher Lastzug einen niedrigen Ladungsschwerpunkt, da die transportierenden Fahrzeuge gegenüber dem Stand der Technik tiefer angeordnet transportiert werden. Dies trägt unter anderem auch zur erhöhten Fahrstabilität des Gespannes bei. Weiterhin ist es vorteilhaft, dass mit dem erfindungsgemäßen Lastzug aus einer erfindungsgemäßen Zugmaschine und zusammen mit einem erfindungsgemäßen Anhänger auf sogenannte teleskopierbare Deichseln bzw. ausfahrbare Deichseln, wie sie gängig im Stand der Technik verwendet werden, zu verzichten. Dies stellt eine erhöhte Festigkeit sicher und trägt somit zur Fahrzeugsicherheit, insbesondere zur Gesamtsicherheit des Lastzuges bei.

Das erfindungsgemäße Verfahren zum Beladen eines Anhängers mit leichten, mittleren oder schweren Nutzfahrzeugen zum Transport derselben schlägt vor, ein erstes auf dem Anhänger in einer Fahrtrichtung vorne zu transportierendes Fahrzeug mit dessen Führerhaus in Fahrtrichtung des Anhängers weisend auf dem Anhänger anzuordnen, wobei eine Vorderachse und eine Hinterachse des ersten zu transportierenden Nutzfahrzeuges in etwa auf einem gleichen horizontalen Niveau angeordnet sind. Weiterhin wird ein zweites zu transportierendes Nutzfahrzeug hinter dem ersten zu transportierenden Nutzfahrzeugs auf dem Anhänger angeordnet, wobei das zweite zu transportierende Nutzfahrzeug entgegen der Fahrtrichtung 11 auf dem Anhänger angeordnet ist, d. h. das ein Heck des zweiten zu transportierenden Nutzfahrzeuges in Fahrtrichtung des Anhängers nach vorne weist. Weiterhin wird beim erfindungsgemäßen Beladeverfahren eine Hinterachse des zweiten zu transportierenden Nutzfahrzeuges mittels geeigneter Hubeinrichtungen gegenüber einer Vorderachse des zweiten zu transportierenden Nutzfahrzeuges angehoben. Hierdurch entsteht in einem Bereich unterhalb der Hinterachse des zweiten zu transportierenden Nutzfahrzeuges ausreichender Laderaum für ein Heck des ersten zu transportierenden Nutzfahrzeuges. Besonders vorteilhaft bei diesem Beladeverfahren ist, dass ein Führerhaus des ersten zu transportierenden Fahrzeuges wegen der nahezu normalen, d. h. in etwa horizontalen Ausrichtung des ersten zu transportierenden Nutzfahrzeuges keinen unerwünschten Überhang zur Zugmaschine bildet, so dass ein ausreichender Schwenkabstand, d. h. ausreichender Freigang zwischen dem Ladegut der Zugmaschine und dem Ladegut des Anhängers gewährleistet ist. Erfindungsgemäß wird der entstehende Übergang durch eine Schrägstellung eines der beiden zu transportierenden Nutzfahrzeuge zum Heck des Anhängers hin verlagert, da das zweite (hintere) zu transportierende Nutzfahrzeug heckseitig angehoben wird und somit das Führerhaus des zweiten zu transportierenden Nutzfahrzeuges entgegen der Fahrtrichtung des Anhängers nach hinten einen Überstand bildet. Dort ist der Überstand aber weniger kritisch und engt die Rangierbarkeit und die Freigängigkeit zwischen Anhänger und Zugmaschine nicht ein.

Gemäß einer besonders bevorzugten Ausführungsform des erfindungsgemäßen Verfahrens wird zunächst das zweite zu transportierende Nutzfahrzeug auf dem Anhänger wahlweise von einer vorderen Stirnseite her oder heckseitig auf den Anhänger aufgefahren. Anschließend wird die Hinterachse des zweiten zu transportierenden Fahrzeuges mittels einer Hubeinrichtung angehoben, so dass ein Laderaum unterhalb der Hinterachse des zweiten zu transportierenden Nutzfahrzeuges entsteht. In einem nächsten Schritt wird das erste zu transportierende Nutzfahrzeug rückwärts fahrend von einer vorderen Stirnseite des Anhängers her auf diesen aufgefahren, bis eine Hinterachse des ersten zu transportierenden Fahrzeuges in eine geeignete Festlegungsvorrichtung, z. B. in einer Mulde aufliegt.

Im Folgenden wird die Erfindung anhand der Zeichnungen beispielhaft näher erläutert. Es zeigen:
- Figur 1:: eine erfindungsgemäße Zugmaschine in einer Seitenansicht in einem ersten Beladungszustand mit einem vierachsigen, zu transportierenden Nutzfahrzeug;
- Figur 2:: die Zugmaschine aus Figur 1 in einer Seitenansicht auf eine Beladungsvariante mit zwei zweiachsigen Nutzfahrzeugen (Zugmaschinen);
- Figur 3:: die Zugmaschine gemäß Figur 1 in einer Seitenansicht auf eine weitere Beladungssituation mit zwei mittleren Nutzfahrzeugen;
- Figur 4:: die Zugmaschine gemäß Figur 1 in einer Seitenansicht auf eine weitere Beladungssituation mit einem hochbauenden Nutzfahrzeug;
- Figur 5:: einen erfindungsgemäßen Anhänger in einer Seitenansicht auf eine Beladungssituation mit zwei Nutzfahrzeugen, wobei ein Nutzfahrzeug einen gegenüber dem anderen Nutzfahrzeug deutlich größeren Radstand besitzt;
- Figur 6:: den erfindungsgemäßen Anhänger gemäß Figur 5 in einer Seitenansicht auf eine zweite Beladungssituation mit einem vierachsigen Nutzfahrzeug;
- Figur 7:: den erfindungsgemäßen Anhänger gemäß Figur 5 in einer Seitenansicht auf eine weitere Beladungssituation mit zwei schweren Nutzfahrzeugen mit annähernd gleichen Radstand;
- Figur 8:: den erfindungsgemäßen Anhänger in einer Draufsicht (unbeladen);
- Figur 9:: einen erfindungsgemäßen Lastzug mit einer erfindungsgemäßen Zugmaschine gemäß Figur 1 und einem erfindungsgemäßen Anhänger gemäß Figur 5.

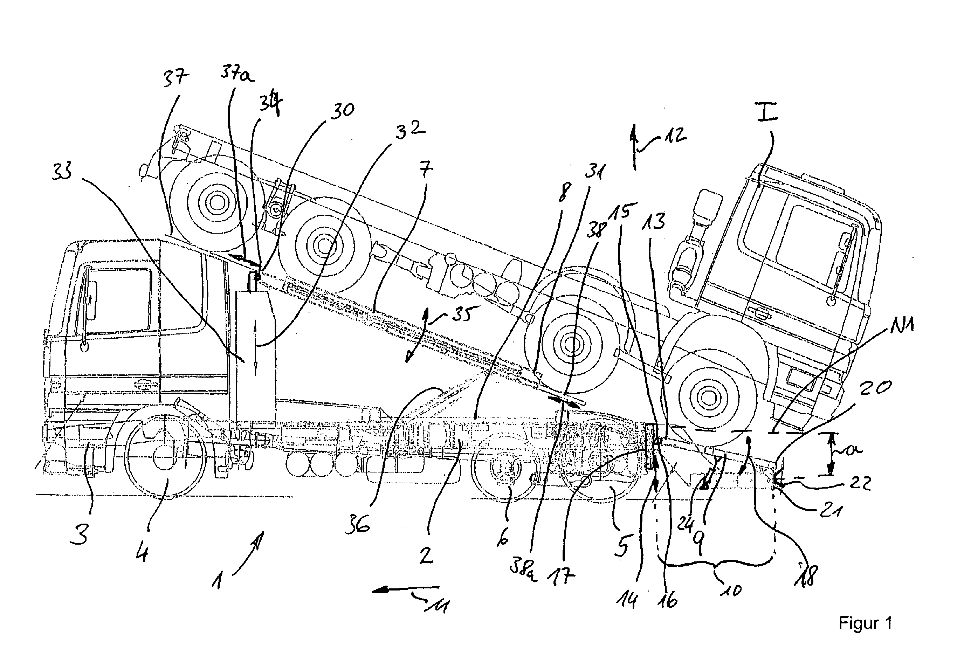

Figur 1 zeigt eine erfindungsgemäße Zugmaschine 1 mit einem Rahmen 2, einem Führerhaus 3, einer Vorderachse 4 und einer Hinterachse 5. Benachbart zur Hinterachse 5 ist vor der Hinterachse 5 im Wesentlichen in bekannter Art und Weise eine Vorlaufachse 6 vorhanden, damit die Zugmaschine 1 zum Transport einer erhöhten Nutzlast geeignet ist.

Die Zugmaschine 1 besitzt zumindest ein erstes relativ zum Rahmen 2 verlagerbares vorderes Pritschenelement 7, ein bezüglich der Zugmaschine 1 ortsfestes Pritschenelement 8 und eine relativ zum Rahmen 2 verlagerbare Heckbühne 9. Die Heckbühne 9 ist einem Heckrahmenabschnitt 10 des Rahmens 2 zugeordnet. Der Heckrahmenabschnitt 10 ist in einer Fahrzeuglängsrichtung 11 gesehen hinterhalb der hintersten Achse (Hinterachse 5 der Zugmaschine 1) in einer Fahrzeughochrichtung 12 um ein Maß a nach unten versetzt angeordnet. Die Heckbühne 9 besitzt ein in Fahrzeuglängsrichtung 11 nach vorne weisendes erstes Ende 13, mit dem Heckbühne 9 relativ zur Zugmaschine 1 linear, insbesondere in einer Vertikalrichtung 14 relativ zur Zugmaschine 1 verlagerbar ist. Weiterhin besitzt die Heckbühne 9 an ihrem vorderen Ende 13 eine Gelenkeinrichtung 15, mit der die Heckbühne 9 um eine Achse 16 parallel zu einer Fahrzeugquerrichtung der Zugmaschine 1 schwenkbar verlagerbar ist. Die Heckbühne 9 ist mit einer Einrichtung 17 zum linearen Verlagern entlang der Vertikalrichtung 14 gekuppelt, wobei die Einrichtung 17 zum vertikalen Verlagern zweckmäßigerweise ein Hydraulikzylinder oder eine Spindelhubeinrichtung ist. Die Einrichtung 17 zum vertikalen Verlagern ist zweckmäßigerweise hinter der Hinterachse 5 angeordnet.

Die Heckbühne 9 besitzt ein in Fahrzeuglängsrichtung 11 gesehen hinteres freies Ende 20, welches mit einem hinteren freien Ende 21 des Heckrahmenabschnitts 10 in Fahrzeughochrichtung 12 in etwa fluchtet. Stirnseitig am hinteren freien Ende 21 ist eine Kupplungseinrichtung 22 zum Ankuppeln eines Anhängers angeordnet. Zum Verschwenken der Heckbühne 9 um die Achse 16 in einer Pfeilrichtung 23 ist ein Hydraulikzylinder 24 vorhanden, welcher sich einendig an der Heckbühne 9 und anderendig am Heckrahmenabschnitt 10 abstützt.

Das vordere Pritschenelement 7 besitzt ein in Fahrzeuglängsrichtung 11 vorderes freies Ende 30 und ein in Fahrzeuglängsrichtung 11 freies Ende 31. Das vordere Ende 30 ist in einer Vertikalrichtung 32 bezüglich der Zugmaschine 1 verlagerbar. Hierzu ist das vordere freie Ende 30 mit einer Spindelhubeinrichtung 33, die untermittelbar hinter dem Führerhaus 3 auf dem Rahmen 2 der Zugmaschine 1 angeordnet ist, verbunden. Das vordere Pritschenelement 7 ist mittels einem Gelenkbolzen 34 um eine Schwenkachse parallel zur Fahrzeugquerrichtung der Zugmaschine 1 in einer Doppelpfeilrichtung 35 schwenkbar gelagert.

In einem heckseitigen Bereich des vorderen Pritschenelements 7 ist das vordere Pritschenelement 7 mit einem Hydraulikzylinder 36 gekuppelt, welcher einendig gelenkig mit dem vorderen Pritschenelement 7 und anderendig gelenkig mit dem Rahmen 2 verbunden ist. Sowohl im Bereich des freien Endes 30 als auch im Bereich des freien Endes 31 des Pritschenelements 7 ist eine vordere Ausschubpritsche 37 und eine hintere Ausschubpritsche 38 vorhanden, welche mittels geeigneter Antriebsmittel, z. B. Hydraulikzylinder (nicht gezeigt) in einer Doppelpfeilrichtung 37a und 38a jeweils relativ zum vorderen Pritschenelement 7 antreibbar aus- und einfahrbar sind. Die vordere Ausschubpritsche 37 ist derart weit aus dem vorderen Pritschenelement 7 herausfahrbar, dass die vordere Ausschubpritsche 37 bei Bedarf bis über das Führerhaus 3 ragt. Hierzu muss sich selbstverständlich das vordere Pritschenelement 7 mittels der Spindelhubeinrichtung 33 in einer ausreichend angehobenen Position befinden. Die hintere Ausschubpritsche 38 ist bevorzugt derart weit aus dem vorderen Pritschenelement 7 ausfahrbar, dass die hintere Ausschubpritsche 38 mit einem freien Ende bis auf ein Rahmenniveau N1 verfahrbar ist.

In einer Beladungssituation gemäß Figur 1 trägt das erfindungsgemäße Zugfahrzeug 1 ein zu transportierendes schweres, vierachsiges Nutzfahrzeug I, wobei das Heck des zu transportierenden Nutzfahrzeuges I in Fahrtrichtung 11 weist. Das vordere Pritschenelement 7 befindet sich in einer vorderendig angehobenen Stellung, die vordere Ausschubpritsche 37 ist in der Doppelpfeilrichtung 37a ausgefahren, die hintere Ausschubpritsche ist in einer Doppelpfeilrichtung 38a ausgefahren und die Heckbühne 9 befindet sich mit ihrem vorderen Ende 13 in einer gegenüber dem Niveau N1 etwas abgesenkten, entgegen der Fahrtrichtung 11 abfallenden Position. Das freie Ende 20 der Heckbühne 9 befindet sich in etwa auf dem Niveau des freien Endes 21 des Heckrahmenabschnitts 10. Hierdurch gelingt es, ein vierachsiges schweres Nutzfahrzeug I mit einer erfindungsgemäßen Zugmaschine 1 zu transportieren, wobei eine hinterste Hinterachse des Fahrzeugs I auf der vorderen Ausschubpritsche 37 aufsitzt und eine weiter vorne angeordnete Hinterachse des Fahrzeugs I auf dem vorderen Pritschenelement 7 zu liegen kommt. Eine vorderste Vorderachse des Nutzfahrzeugs I sitzt auf der Heckbühne 9 auf, wobei eine zweite etwas weiter hinten angeordnete Vorderachse des vierachsigen Nutzfahrzeugs I auf der hinteren Ausschubpritsche 38 zu liegen kommt. Das vordere Pritschenelement 7 und die Heckbühne 9 sind gleichsinnig entgegen der Fahrzeuglängsrichtung 11 abfallend geneigt, so dass in etwa eine gemeinsame Ladeebene gebildet ist.

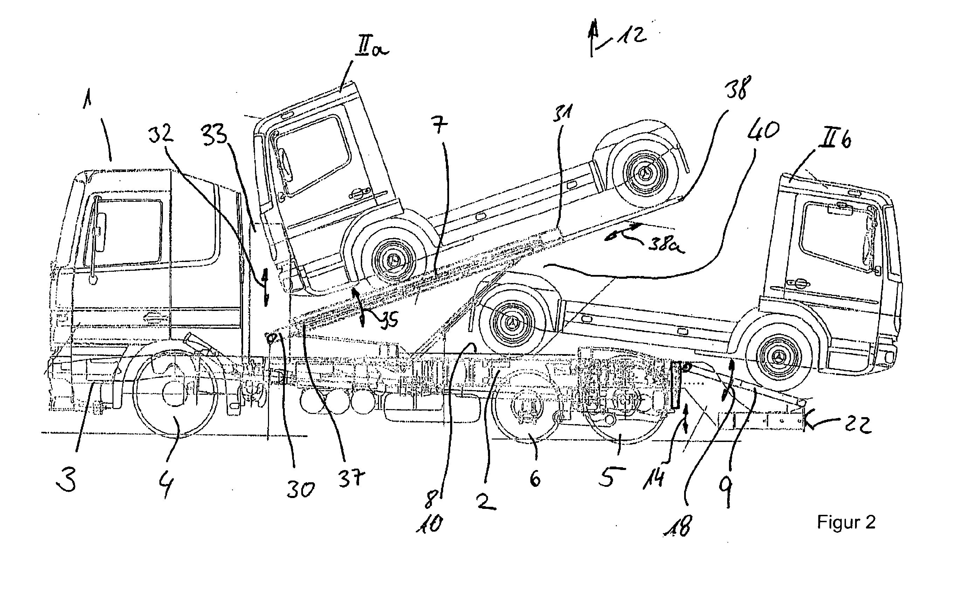

Figur 2 zeigt eine Beladungssituation der erfindungsgemäßen Zugmaschine 1 mit zwei mittelschweren, zweiachsigen Nutzfahrzeugen IIa und IIb. Die Fahrzeuge IIa und IIb weisen in etwa den gleichen Radstand auf. Das vordere Pritschenelement 7 befindet sich in einer an ihrem vorderen Ende 30 in Fahrzeughochrichtung 12 abgesenkten Stellung und weist mit seinem hinteren freien Ende 31 schräg nach oben. Die vordere Ausschubpritsche 37 ist eingefahren, wohingegen die hintere Ausschubpritsche 38 ausgefahren ist. Hierdurch wird ein Zwischenraum 40 zwischen dem vorderen Pritschenelement 7 und dem ortsfesten Pritschenelement 8 freigegeben, in dem ein Heckbereich des zweiten zu transportierenden Nutzfahrzeugs II angeordnet ist. Eine Vorderachse des Fahrzeugs II liegt auf der Heckbühne 9 auf. Eine Hinterachse des Fahrzeugs II liegt auf dem ortsfesten Pritschenelement 8 auf. Eine Vorderachse des zu transportierenden Nutzfahrzeugs IIa liegt auf dem vorderen Pritschenelement 7 auf, wohingegen eine Hinterachse des Fahrzeugs IIa auf der hinteren Ausschubpritsche 38 aufsitzt.

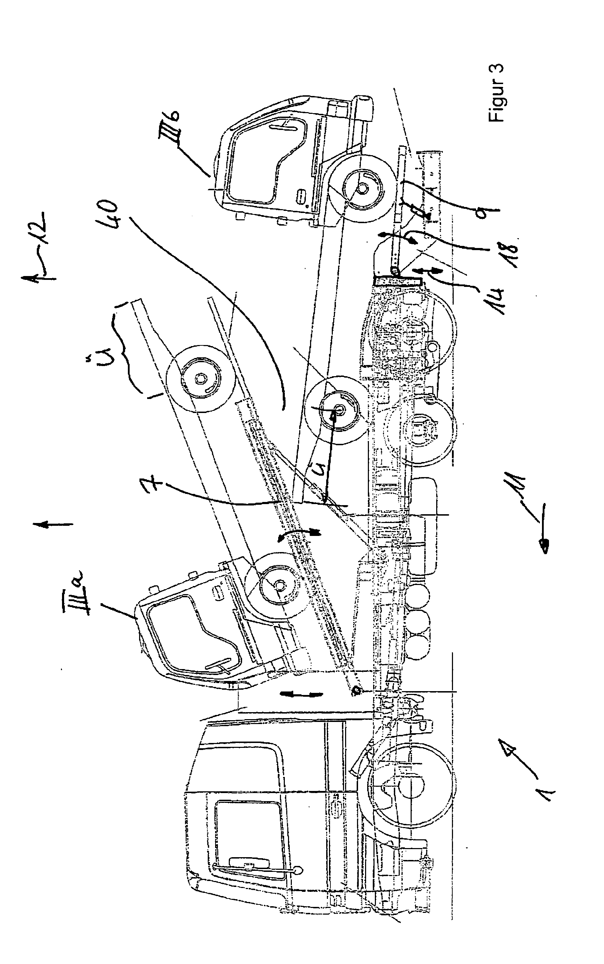

Figur 3 zeigt eine Beladungssituation einer erfindungsgemäßen Zugmaschine 1 mit zwei mittelschweren Nutzfahrzeugen IIIa und IIIb, wobei diese Nutzfahrzeuge einen erhöhten Überhang Ü über deren jeweilige Hinterachsen aufweisen. Ein derartiger Überhang bildet eine Störkontur beim Verladen von derartigen Nutzfahrzeugen IIIa und IIIb. Für einen solchen Beladungsfall ermöglicht die erfindungsgemäße Zugmaschine 1 durch eine entsprechende Anpassung der Heckbühne 9 hinsichtlich ihrer vertikalen Verlagerung in der Richtung 14 und hinsichtlich der Verschwenkung in Doppelpfeilrichtung 18, das Fahrzeug IIIb derart auszurichten, das es in den Freiraum 40 unterhalb des vorderen Pritschenelements 7 passt, ohne dass das vordere Pritschenelement 7 heckseitig derart weit angehoben werden muss, dass eine gesetzlich zulässige maximale Ladehöhe überschritten wird.

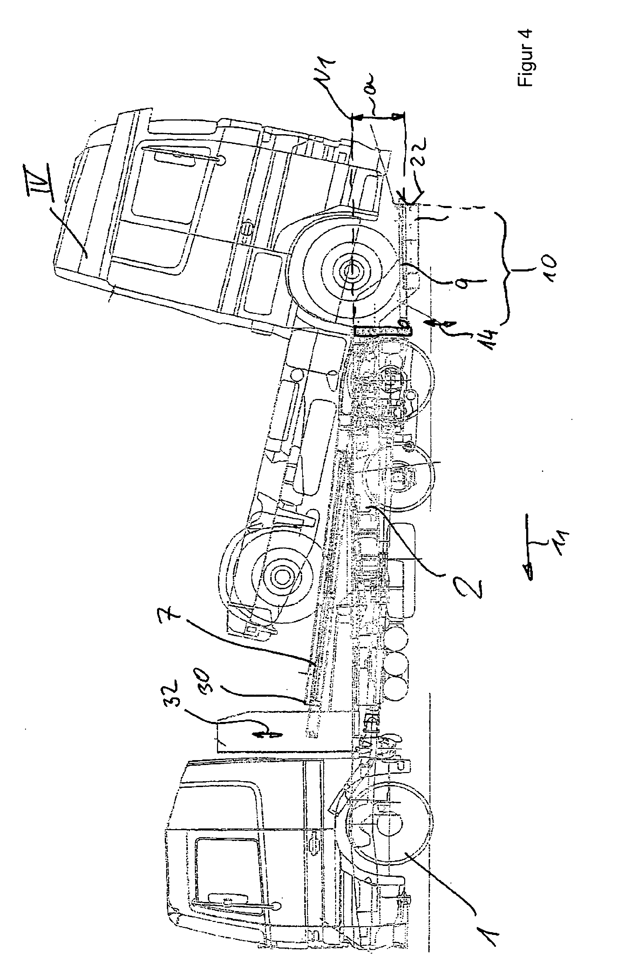

Figur 4 zeigt eine weitere Beladesituation der erfindungsgemäßen Zugmaschine 1, wobei das zu transportierende Fahrzeug IV eine einzelne Zugmaschine ist, welche ein besonders hochbauendes Führerhaus hat. Für eine solche Beladesituation ermöglicht es die erfindungsgemäße Zugmaschine 1, die Heckbühne 9 in eine in Vertikalrichtung 14 vollständig abgesenkte Stellung zu verlagern, wobei sich die Heckbühne 9 in etwa horizontal entgegen der Fahrtrichtung 11 nach hinten erstreckt und auf einem Niveau deutlich unterhalb (um das Maß a versetzt) des Niveaus N1 angeordnet ist. Hierdurch kann die maximal zulässige Ladehöhe eingehalten werden, ohne dass Teile des zu transportierenden Fahrzeugs IV demontiert werden müssen. Bei einer solche Beladesituation ist es zweckmäßig, das vordere Pritschenelement 7 im Bereich seines vorderen Endes 30 in der Vertikalrichtung 32 ein Stück anzuheben, so dass das vordere Pritschenelement 7 entgegen der Fahrzeugrichtung leicht abfallend angeordnet ist. Das zu transportierende Zugfahrzeug IV steht zweckmäßigerweise mit seiner Vorderachse auf der Heckbühne 9 und mit seiner Hinterachse auf dem vorderen Pritschenelement 7. Durch ein leichtes Anheben des vorderen Pritschenelements 7 ist eine ausreichende Bodenfreiheit für das zu transportierende Fahrzeug IV im Bereich kurz hinter dessen Vorderachse, d. h. in der vorliegenden Beladungssituation im Bereich des Übergangs vom hinteren abgesenkten Heckrahmenabschnitt 10 zum Rahmen 2 sichergestellt.

Ein erfindungsgemäßer Anhänger 50 besitzt einen Rahmen 51, eine in der Fahrtrichtung 11 des Anhängers 50 vordere Radachse 52, eine mittlere Radachse 53 und eine hintere Radachse 54.

Es ist ein erstes, relativ zum Rahmen 51 verlagerbares Pritschenelement 55 vorhanden, welches zur Aufnahme zumindest eines Rades bzw. einer Radachse 56 eines zu transportierenden Nutzfahrzeuges Va dient. Das erste Pritschenelement 55 ist an einem in Fahrtrichtung 11 vorderen Ende 57 eines Teleskophubarmes 58 angeordnet. Der Teleskophubarm 58 ist mit einem in Fahrtrichtung 11 hinteren Ende 59 um eine Schwenkachse 60 schwenkbar bezüglich des Rahmens 51 gelagert. Die Schwenkachse 60 ist parallel zu einer Fahrzeugquerrichtung des Anhängers 51 ausgerichtet und in der Fahrtrichtung 11 hinter der hinteren Radachse 54 des Anhängers 51 angeordnet. Bevorzugt ist der Teleskophubarm 58 mittels eines Hydraulikzylinders (nicht gezeigt) um die Schwenkachse 60 in einer Doppelpfeilrichtung 61 schwenkbar antreibbar.

Der Teleskophubarm 58 besitzt ein Teleskopaußenrohr 62 und ein Teleskopinnenrohr 63. Das Teleskopaußenrohr 62 und das Teleskopinnenrohr 63 sind zueinander in einer Teleskophubrichtung 64 verlagerbar.

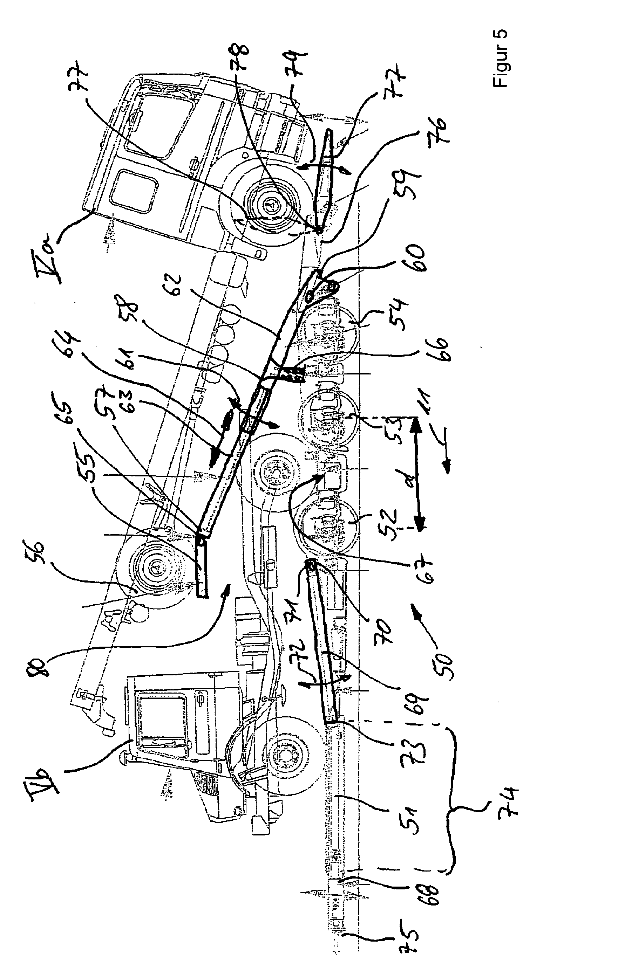

Das freie Ende 57 des Teleskophubarmes 58 weist in einer angehobenen Stellung gemäß Figur 5 in Fahrtrichtung 11 des Anhängers 50 nach oben und nach vorne.

Das erste verlagerbare Pritschenelement 55 ist mittels einer Schwenkgelenkeinrichtung 65 am freien Ende 57 des Teleskophubarmes 58 angebunden. Zum Festlegen und Einstellen der Zuordnung zwischen dem Pritschenelement 55 und dem Teleskophubarm 65 ist ein Hydraulikzylinder (nicht gezeigt) vorgesehen. Der Hydraulikzylinder ist beispielsweise einendig mit dem Pritschenelement 55 und anderendig mit dem Teleskophubarm 58 verbunden.

Im Bereich des Teleskopaußenrohrs 62 weist der Teleskophubarm 58 eine Stützeinrichtung 66 auf, mittels der der Teleskophubarm 58 in zumindest einer, bevorzugt in mehreren verschiedenen Anhebestellungen mechanisch formschlüssig, beispielsweise durch einen Querstift bezüglich des Anhängerrahmens 51 festlegbar ist.

Zumindest zwei Radachsen des Anhängers 50, im vorliegenden Ausführungsbeispiel die vordere Radachse 52 und die hintere Radachse 53 weisen zueinander einen vergrößerten Abstand d auf, so dass in einer Anhängerlängsrichtung 11 zwischen den Radachsen 52 und 53 eine Mulde 67 zur Aufnahme eines Rades eines weiteren zu transportierenden Nutzfahrzeuges Vb gebildet ist.

In einem Bereich zwischen einer Deichsel 68 und der vorderen Radachse 52 ist eine zweite gegenüber dem Rahmen 51 des Anhängers 50 verlagerbare Pritschenelement 69 vorhanden. Das zweite Pritschenelement 69 ist mit seinem hinteren Ende 70 um eine Schwenkachse 71 in einer Doppelpfeilrichtung 72 auf- und abschwenkbar. Ein vorderes freies Ende 73 des zweiten Pritschenelements 69 weist in Fahrtrichtung 11 nach vorne. In einer Ausgangsstellung gemäß Figur 5 ist das zweite Pritschenelement 69 in einer abgesenkten Stellung entgegen der Fahrtrichtung 11 des Anhängers 50 ansteigend angeordnet und bildet zusammen mit einem vorderen Rahmenbereich 74 eine Fahrrampe für zu transportierende Fahrzeuge Va, Vb. Die Deichsel 68 des Anhängers 50 ist als starre nicht teleskopierbare Deichsel 68 ausgebildet und besitzt ein Kupplungselement 75 zum Ankuppeln des Anhängers 50 an eine Zugmaschine 1. Der vordere Rahmenbereich 74 bzw. die Deichsel 68 fluchten in einer Seitenansicht beim Zusammenwirken eines erfindungsgemäßen Anhängers 50 mit einer erfindungsgemäßen Zugmaschine in etwa mit dem abgesenkten Heckrahmenbereich 10 des Zugmaschine 1.

An seinem heckseitigen Ende 76 weist der Anhänger 50 eine Auffahrrampe 77 auf, welche um eine Schwenkachse 78 am heckseitigen Ende 76 des Anhängers 50 in einer Doppelpfeilrichtung 79 schwenkbar angeordnet ist. In einer Beladestellung gemäß Figur 5 erstreckt sich die Auffahrrampe 77 in etwa fluchtend zum heckseitigen Ende 76 des Anhängers 50 nach hinten weg. In einer, in der Figur gestrichelt dargestellten Verstaustellung der Auffahrrampe 77 ist diese im Wesentlichen vertikal nach oben gerichtet angeordnet, wodurch die Gesamtlänge des Anhängers 50 vermindert ist.

In Figur 5 ist eine Beladesituation eines erfindungsgemäßen Anhängers 50 mit dem ersten zu transportierenden Nutzfahrzeug Va mit einem vergleichsweise langen Radstand und einem großen heckseitigen Überstand und mit einem relativ kurzen Nutzfahrzeug Vb dargestellt. Das Nutzfahrzeug Va steht mit seinen Hinterrädern 56 auf dem Pritschenelement 55 auf, welches durch den Teleskophubarm 58 in einer angehobenen Position angeordnet ist. Die Vorderräder des zu transportierenden Fahrzeuges Va sind im Bereich des heckseitigen Endes 76 des Anhängers 50 angeordnet. Ein Führerhaus 3 des Fahrzeuges Va weist in Fahrtrichtung 11 nach hinten. Mittels des Teleskophubarms 58 ist das erste zu transportierende Nutzfahrzeug Va derart weit angehoben, dass unterhalb des Teleskophubarmes 58 ein Freiraum 80 entsteht, der für ein zweites zu transportierendes Nutzfahrzeug Vb nutzbar ist. Dieses wird mit seinem Heck entgegen die Fahrtrichtung 11 weisend auf dem Anhänger 50 angeordnet, so dass die Hinterachse bzw. die Hinterräder des Nutzfahrzeuges Vb in der Mulde 67 zum Liegen kommt. Vorderräder bzw. eine Vorderachse befinden sich in einem vorderen Rahmenbereich 74 des Anhängers 50. Das zu transportierende Nutzfahrzeug Vb weist mit seinem Führerhaus 3 in die Fahrtrichtung 11. Hierdurch wird gewährleistet, dass das Nutzfahrzeug Vb, welches der Zugmaschine 1 am nächsten ist, hinsichtlich seiner Ausrichtung relativ waagrecht transportiert wird. Hierdurch gelingt es, geringe Führerhausüberstände in Fahrtrichtung 11 nach vorne zu realisieren, welche es erlauben, den Abstand zwischen einem hinteren Fahrzeug auf der Zugmaschine 1 und dem vorderen Nutzfahrzeug Vb auf dem Anhänger 50 beim Transport der Fahrzeuge möglichst gering zu halten. Hierdurch kann eine teleskopierbare Deichsel entfallen. Durch das bewusste Schrägstellen des hinteren, zu transportierenden Nutzfahrzeuges IVa wird der Überstand des Führerhauses 3, welcher durch das Neigen bzw. Schrägstellen des Nutzfahrzeuges Va entsteht zum Heck des Anhängers 50 hin verlagert. Dort ist der Überstand wesentlich weniger störend.

Figur 5 verdeutlich insbesondere eine besonders bevorzugte Beladesituation, die durch die Erfindung ermöglicht ist. Besonders vorteilhaft hierbei ist, dass das letzte heckseitig geladene Nutzfahrzeug Va mit seinem Heck in Fahrtrichtung 11 zeigt und die Hinterachse des Nutzfahrzeuges Va gegenüber der Vorderachse des Nutzfahrzeuges Va angehoben angeordnet ist.

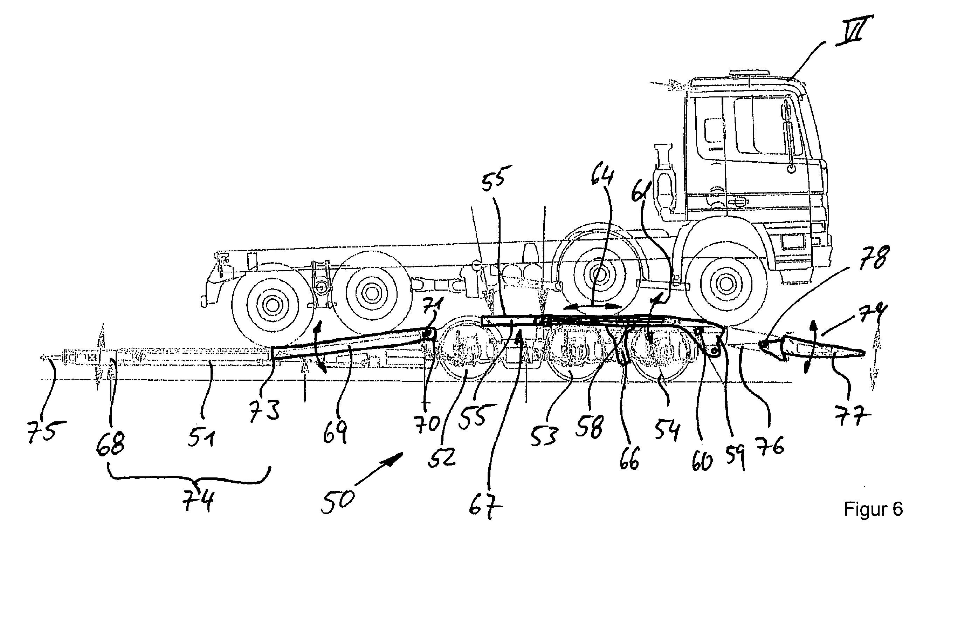

Ein erfindungsgemäßer Anhänger 50 in einer zweiten Beladungssituation mit einem vierachsigen schweren Nutzfahrzeug ist in Figur 6 schematisch dargestellt. Zum Transport eines solchen Nutzfahrzeuges VI ist das erste verlagerbare Pritschenelement 55 zusammen mit dem Teleskophubarm 58 in einer vollständig abgesenkten Stellung abgelegt, so dass der Teleskophubarm 58 zusammen mit dem Pritschenelement 55 zumindest die mittleren und hinteren Radachsen 53, 54 überdecken. Das Pritschenelement 55 überdeckt die Mulde 67. Somit bilden der vordere Rahmenbereich 74 des Anhängers 50, die zweite Pritscheneinrichtung 69 in abgesenkter Stellung, die erste Pritscheneinrichtung 55 in abgesenkter Stellung sowie der Teleskophubarm 58 in abgesenkter Stellung, ein hinterer Rahmenbereich 76 des Anhängers 50 sowie das Auffahrrampenelement 77 in seiner abgesenkten Stellung eine im Wesentlichen durchgehende, von einem zu transportierenden Nutzfahrzeug VI befahrbare Bahn. Der erfindungsgemäße Anhänger 50 erlaubt es, ein derart großes und schweres Nutzfahrzeug in nahezu horizontaler Stellung zu transportieren, ohne dass eine teleskopierbare Deichsel notwendig ist.

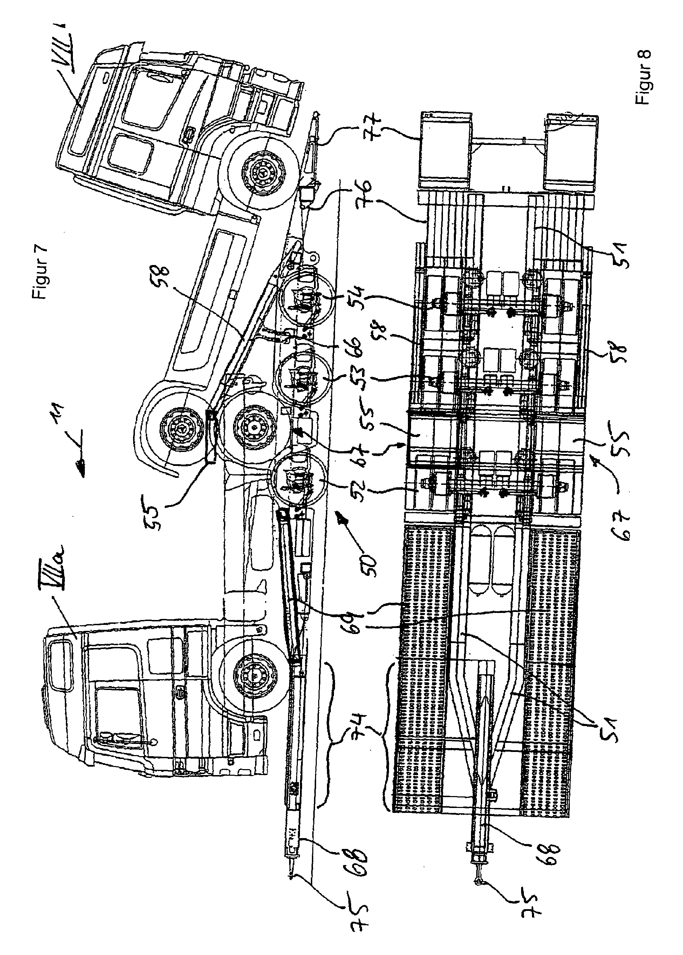

Figur 7 zeigt einen erfindungsgemäßen Anhänger 50 in einer weiteren Beladungssituation mit zwei zu transportierenden Nutzfahrzeugen VIIa und VIIb. Die beiden Fahrzeuge VIIa und VIIb weisen annähernd den gleichen Radstand auf. Das in Fahrtrichtung 11 vordere Nutzfahrzeug VIIa steht mit seiner Vorderachse im Bereich des vorderen Rahmenbereichs 74 auf dem Anhänger 50 auf. Eine Hinterachse des Fahrzeugs VIIa befindet sich in der Mulde 67. Eine Vorderachse des Fahrzeugs VIIb liegt im Bereich des heckseitigen Endes 76 des Anhängers 50 und ggf. etwas auf der Auffahrrampe 77 auf. Eine Hinterachse des Nutzfahrzeuges VIIb ist vom ersten Pritschenelement 55 aufgenommen, welches mittels des Teleskophubarms 58 in einer teilweise angehobenen Verlagerungsstellung angeordnet ist. Gegenüber der Beladungssituation gemäß Figur 5 ist der Teleskoparm 58 in einer weiter zusammengefahrenen Anordnung, so dass die Hinterachse des Nutzfahrzeuges VIIb etwa oberhalb der Hinterachse des Nutzfahrzeugs VIIa zu liegen kommt. Aus den unterschiedlichen Beladungssituationen gemäß Figur 5 bis 7 wird insbesondere die hohe Variabilität des erfindungsgemäßen Anhängers deutlich. Auch bei der Beladungssituation gemäß Figur 7 ist das in Fahrtrichtung 11 vordere Nutzfahrzeug VIIa im Wesentlichen waagrecht ausgerichtet, so dass das Führerhaus des Nutzfahrzeuges VIIa nicht, oder nur unwesentlich in Fahrtrichtung 11 nach vorne geneigt ist. Dies stellt einen ausreichenden Abstand zwischen dem Führerhaus des Nutzfahrzeuges VIIa auf dem Anhänger 50 und einem hinteren Nutzfahrzeug auf einer Zugmaschine 1 sicher, so dass die Deichsel 68 als starre Deichsel ausgebildet sein kann und nicht zum Transport der Fahrzeuge ausgezogen, d. h. austeleskopiert werden muss.

Der erfindungsgemäße Anhänger 50 ist in Figur 8 in einer Draufsicht dargestellt. Es wird deutlich, dass der Rahmen 51 in Fahrzeugquerrichtung relativ schmal ausgebildet ist, wobei seitlich benachbart zum Rahmen 51 der vordere Bereich 74, das zweite verlagerbare Pritschenelement 69, jeweils ein Pritschenelement 55 sowie Teleskophubarme 58 links und rechts benachbart zum Rahmen 51 angeordnet sind. Zweckmäßigerweise ist der Anhänger 50, wie auch eine erfindungsgemäße Zugmaschine 1, in Längsrichtung im Wesentlichen symmetrisch ausgebildet.

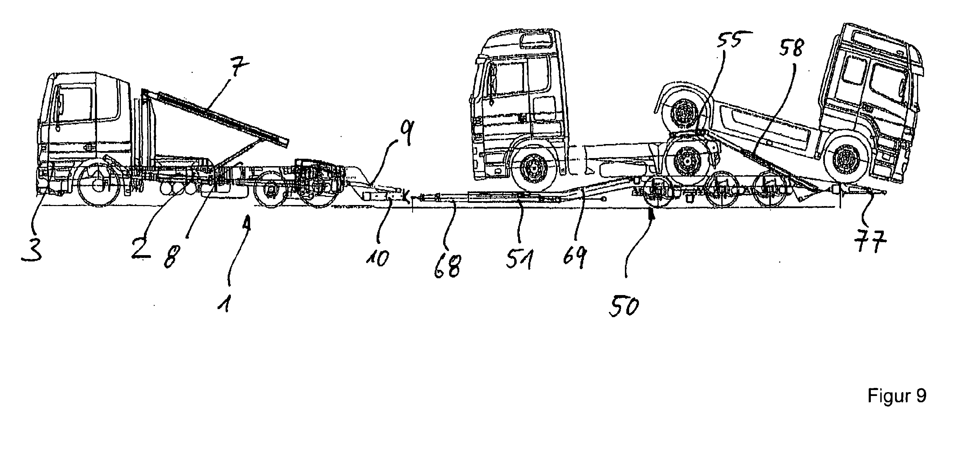

Figur 9 zeigt einen erfindungsgemäßen Lastzug mit einer erfindungsgemäßen Zugmaschine 1 und einem erfindungsgemäßen Anhänger 50 in gekuppeltem Zustand. Der Anhänger 50 ist in einer Beladesituation analog zu Figur 7 dargestellt. Die Zugmaschine 1 ist in der Darstellung gemäß Figur 9 leer, wobei das vordere Pritschenelement 7 und die Heckbühne 9 in etwa eine Anordnung gemäß Figur 7 besitzen.

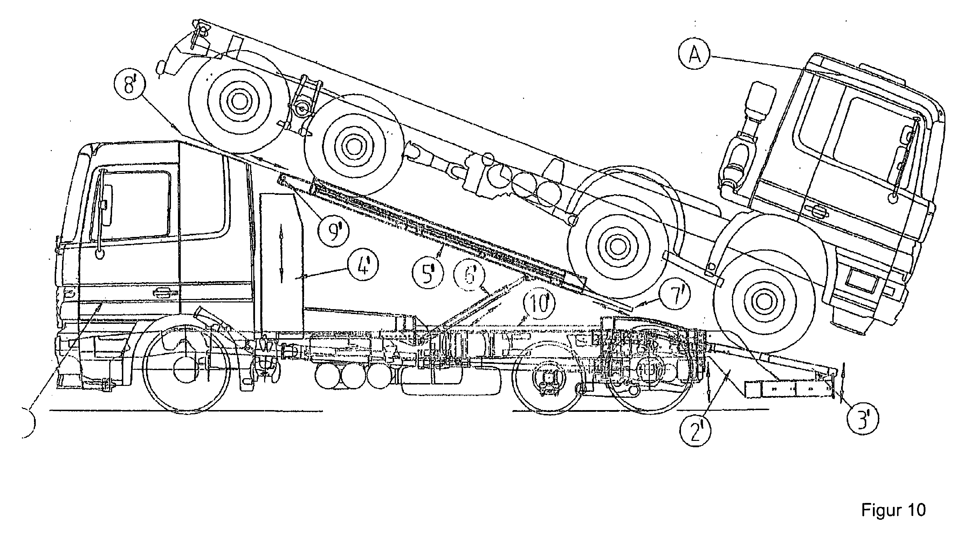

Zum Zwecke der Einbindung des vollständigen Offenbarungsgehalts der prioritätsbegründenden deutschen Patentanmeldung 10 2006 056 733.1 wird nachfolgend der Anmeldungstext (Beschreibung, Zeichnungen und Ansprüche) in diese Anmeldung aufgenommen, wobei die Figuren 1 bis 7 der prioritätsbegründenden Anmeldung zum Zwecke der leichteren Unterscheidbarkeit in die Figuren 10 bis 16 umnummeriert wurden. Die Bezugszeichen 1 bis 22 der prioritätsbegründenden Anmeldung wurden in die Bezugszeichen 1' bis 22' geändert. Die Ansprüche 1 bis 4 der prioritätsbegründenden Anmeldung wurden als weitere Teile der Beschreibung umformuliert und aufgenommen.

Der vorliegenden Erfindung liegt die Aufgabe zugrunde, einen Lastzug der vorstehenden Art zu schaffen, der folgenden Anforderungen entspricht:
- Transport leichter, mittlerer oder schwerer Nutzfahrzeuge sowohl auf der Zugmaschine wie auch auf dem Anhänger ohne die gesetzlichen Längen, Höhen und Gewichte bei wirtschaftlicher optimaler Ausnutzung des zur Verfugung stehenden Laderaums zu überschreiten.
- Lademöglichkeit am Anhänger, insbesondere von schweren und hohen Nutzfahrzeugen, auf der oberen Pritsche wie auch auf der unteren Pritschenbühne.
- Verwendungsmöglichkeit eines handelsüblichen, wirtschaftlichen und Schadstoffarmen Zugwagens.

Diese Aufgabe wird erfindergemäß dadurch gelöst, dass ein Zugwagen mit einer dritten Achse verwendet wird, dem nach der letzten Achse der Rahmen nach unten versetzt wird um das hintere Pritschenelement über Zylinder nach unten zu bewegen, sein bewegliches Pritschenteil zwischen Fahrerhaus und dem hinteren Pritschenelement über zwei nach dem Fahrerhaus angeordneten Hubspindelsäulen und zwei hintern Hubzylindern in Höhe und Neigung verstellbar ist und gleichzeitig in der Länge, per Zylinder, über das Fahrerhaus, in angehobener Stellung, verlängerbar, wie auch das Pritschenelement über einen Zylinder und einer Ausschubpritsche nach hinten Verlängerbar ist. Einen Anhänger zu schaffen der durch seine besondere Rahmengestaltung und Achsanordnung es ermöglicht den Abstand, der einzelnen unteren Pritschenelemente, zum Boden auf ein Minimum zu reduzieren und damit das Höhenvolumen der zu transportierenden Last zu vergrößern. Des weiteren ist das obere Pritschenelement des Anhängers über zwei teleskopierbare, außen liegende Hubärme in Länge und Neigung über Zylinder verstellbar. Diese Aufgabe wird durch die im Patentanspruch 3 genannten Merkmale gelöst.

Es folgt die Erläuterung der Erfindung anhand der Zeichnungen nach Aufbau und ggf. auch nach Wirkungsweise der dargestellten Erfindung. Weitere Merkmale der Erfindung sind Gegenstand von Unteransprüchen.

Fig. 10 zeigt eine schematische Seitenansicht des Zugwagens eines Lastzuges gemäß der Erfindung für den Transport langer leichter, mittlerer und schwerer Nutzfahrzeuge in der für den Transport eines schweren Nutzfahrzeuges vorgesehener Position,

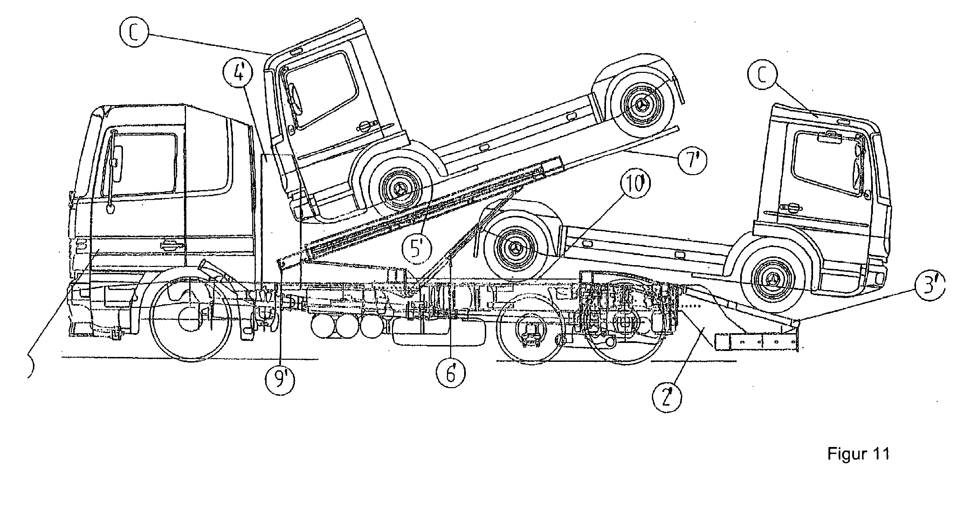

Fig. 11 zeigt - analog zu Fig. 10 - den gleichen Zugwagen in der Position für den Transport von zwei mittleren Nutzfahrzeugen,

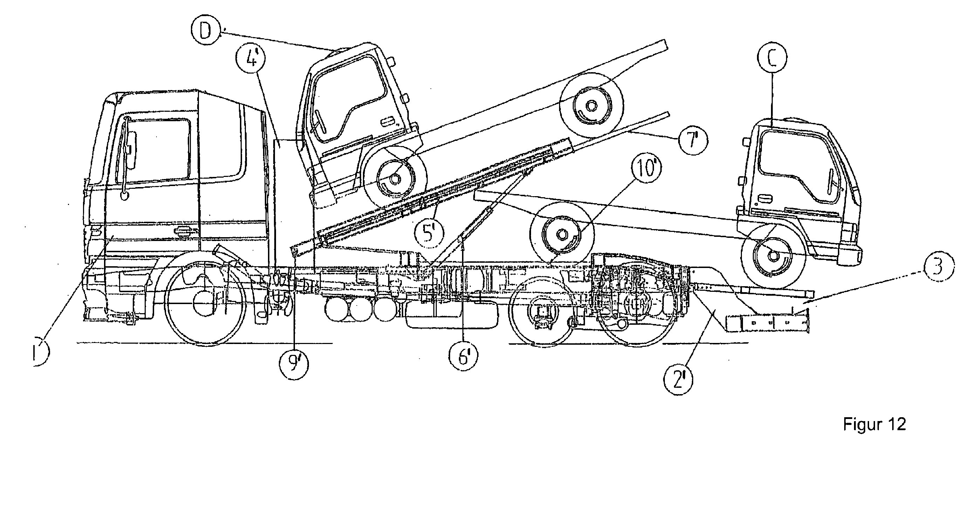

Fig. 12 zeigt - analog zu Fig. 10 - den gleichen Zugwagen in der Position für den Transport von zwei leichten Nutzfahrzeugen,

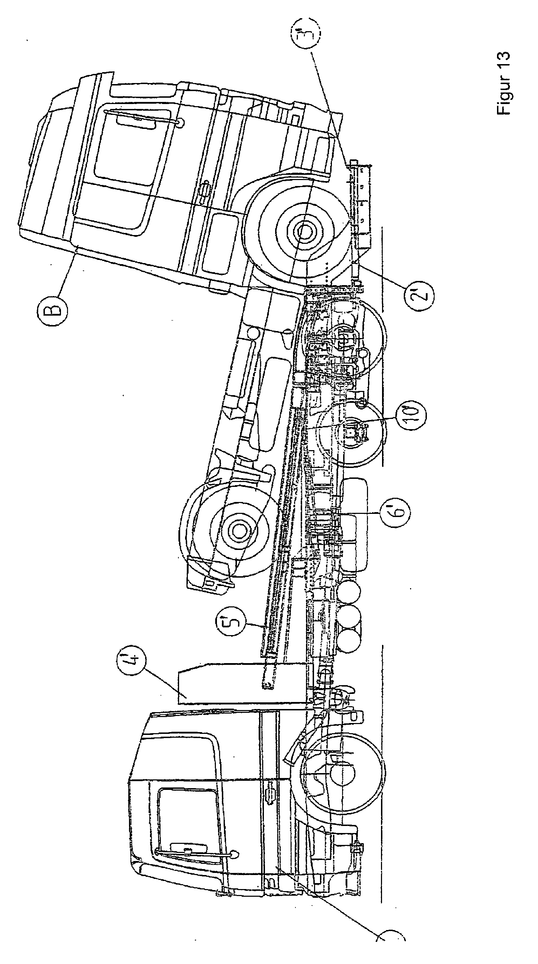

Fig. 13 zeigt - analog zu Fig. 10 - den gleichen Zugwagen in der Position für den Transport von einem schweren und hohem Nutzfahrzeug.

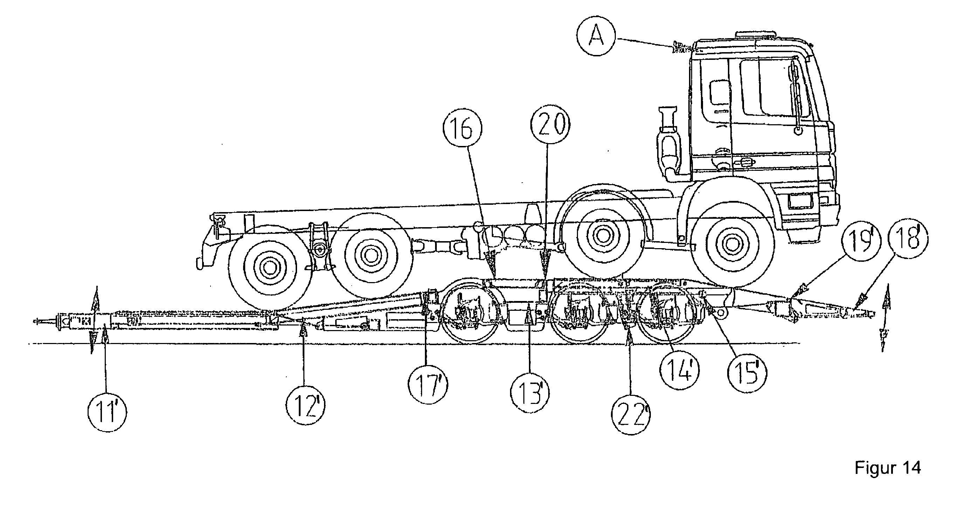

Fig. 14 zeigt in Seitenansicht einen Anhänger des Lastzuges gemäß der Erfindung in der für den Transport eines schweren Nutzfahrzeuges langer Bauart bestimmter Position,

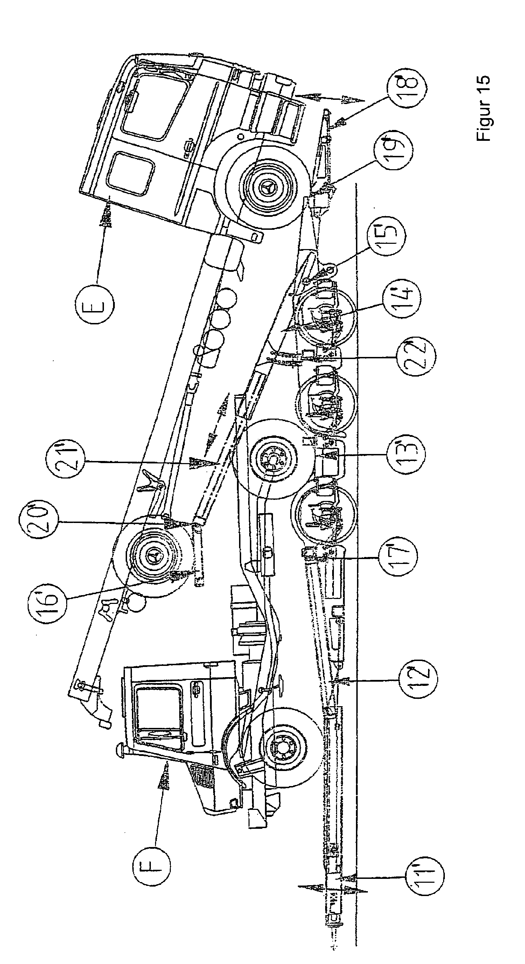

Fig. 15 zeigt - analog zu Fig. 10 - denselben Anhänger in der für den Transport zweier Nutzfahrzeuge unterschiedlicher Abmessungen, nämlich eines schweres, mittellanges und eines mittelschweren langen Fahrzeuges in geeigneter Transportstellung,

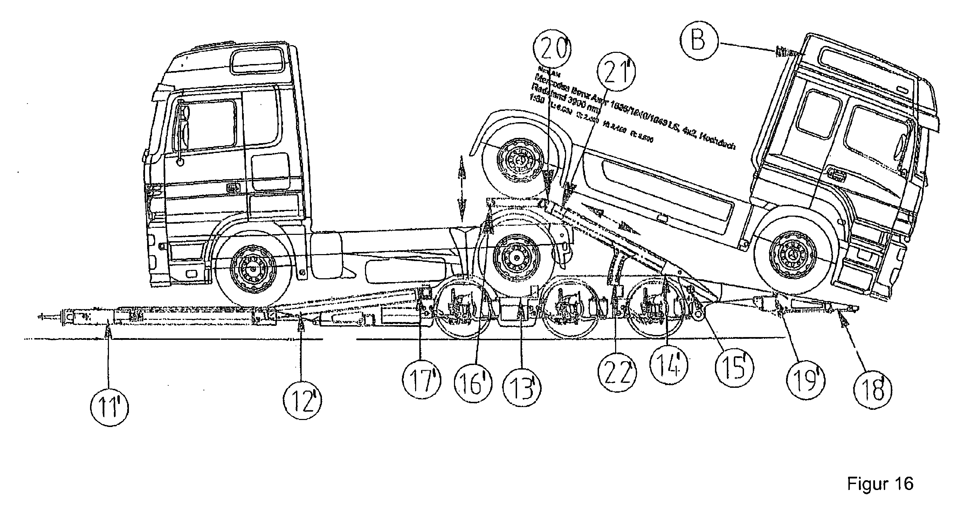

Fig. 16 zeigt - analog zu Fig. 10 - denselben Anhänger in der für den Transport zweier Nutzfahrzeuge gleicher Abmessungen, nämlich zweier schwerer, hoher Fahrzeuge in geeigneter Transportstellung,

in Fig. 10 ist der Zugwagen mit 1' bezeichnet. Am Rahmen des Zugwagens, befindet sich auf beiden Seiten des Rahmens ein Pritschenelement 10' zum Tragen einer Hinterachse eines Nutzfahrzeuges. Im hinteren Bereich nach der letzten Achse befindet sich der nach unten gezogene Rahmen 2' um das absenken des schweren Nutzfahrzeuges A' mit der über Zylinder gesteuerten Heckbühne 3' zu ermöglichen. Zwischen Fahrerhaus und dritter Achse ist ein Pritschenelement 5' überlagert, dies mit seinem vorderem Ende an Schanierbolzen 9' befestigt ist, diese werden wiederum über den Spindelhubturm 4' getragen. Die Spindelhubtürme 4' erlauben es einerseits, die zulässige Ladehöhe in Abhängigkeit vom Raumbedarf der zu transportierenden Fahrzeuge maximal auszunutzen.

Die Pritsche 5' ist mittels Hydraulikzylinder 6' in die in Fig. 1 dargestellten Position angehoben. Die Ausschubpritschenelemente 8' und 7' dienen hierbei zur Verlängerung der Pritsche 5', um zu Gewährleisten, dass jede Achse fest mit den Pritschenelementen verbunden ist.

Bei der in Fig. 10 dargestellten geneigten Position dient das schwenk- und verlängerbare Pritschenelement 5' zum laden wie auch zum transportieren eines sehr schweren Nutzfahrzeuges. Das Fahrzeug A' wird damit in der beschriebenen geneigten Position befördert und belegt den Zugwagen völlig, da seine Abmessungen und Gewicht die Zuladung weiterer Fahrzeuge nicht gestattet.

Gemäß Fig. 11 kann der Zugwagen auch für den Transport zweier mittelschwerer Nutzfahrzeuge C' Angepasst werden, hierzu wird das schwenkbare Pritschenelement 5' um die vorderen Bolzen 9', mit Hilfe von den Hydraulikzylindern 6' gedreht und auch über diese Selbsthemmenden Zylinder gestützt. Für die Ladung der beiden Fahrzeuge C' wird zuerst die Bühne 5' in eine Rampenähnliche Stellung ( wie in Fig. 10 ) gebracht und danach das Fahrzeug C' auf das Pritschenelement mit ausgefahrenem Ausschubelement verbracht Anschließend wird das schwenkbare Pritschenelement 5' vorne mittels des Spindelhubturms 4' nach unten gefahren und danach wird das Pritschenelement 5' um die vorderen Bolzen 9' verschwenkt, so dass unterhalb ein für den Durchgang der Ladepritsche des zweiten Fahrzeuges A' ausreichender Raum entsteht. Die Hinterachse, des unteren zu ladenden Fahrzeuges steht auf den Pritschenelement 10' und die Vorderachse auf der hydraulisch neig- und absenkbaren Heckpritsche 3'.

Fig. 12 zeigt - analog zu Fig. 11 - ein Ladebeispiel von leichten Nutzfahrzeugen, wobei es sich hierbei auch um Transporter oder Geländewagen oder ähnliches handeln kann.
Gemäß Fig. 13 kann der Zugwagen auch für den Transport von einem hohen und gleichzeitig Schwerem Nutzfahrzeug eingestellt werden, hierzu wird das schwenkbare Pritschenelement 5' Über den Spindelhubturm 4' etwas angehoben, so dass das zu transportierende Fahrzeug mit seinem Unterboden nicht auf dem Zugwagen 1' aufsitzt und anschließend wird die Vorderachse des zu transportierenden Fahrzeuges B' über das Pritschenelement 3' soweit gegen den Boden abgesenkt, bis die gesetzliche zulässige Gesamthöhe erreicht wird.

In Fig. 14 ist ein Anhänger des Lastzuges gemäß der Erfindung dargestellt, der zum Transport leichter, mittlerer und schwerer Nutzfahrzeuge ausgelegt ist.

Mit 15 ist der Anhängerrahmen bezeichnet, an dem vorne seitlich über das Gelenk 17' die Pritsche 12' angebracht ist. Die Pritsche 12' kann über den Gelenkpunkt 17',hydraulisch mittels Zylinder, in der Neigung verstellt werden.
Zwischen der ersten und der zweiten Achse ist eine Mulde 13' zur Aufnahme von unterschiedlich Großen Hinterachsrädern, links und rechts des Rahmens montiert. Darüber auf dem Rahmen 11 des Anhängers liegt Pritschenelement 16' in abgelassener Stellung, dieses ist wiederum über ein Gelenk 20' mit dem Teleskoparm 14' verbunden, der sich auch in abgelassener Stellung befindet. Im Heckbereich des Anhängers befindet sich ein Auffahrrampenelement 18', dass sich mittels eines Hydraulikzylinders über das Gelenk 19' nach oben oder nach unten klappen lässt. In diesem Zustand eignet sich der Anhänger zum beladen wie auch zum Transport von sehr schweren und langen Nutzfahrzeugen A'.

Gemäß Fig. 16 kann der Anhänger auch zum Transport zweier unterschiedlicher schwerer und in den Abmaßen nicht identischer Nutzfährzeuge E' und F' angepasst werden. Hierzu wird das Fahrzeug E über die Rampe 18' rückwärts bis zur Pritsche 16' gefahren, danach wird das Pritschenelement über die Teleskopärme, die wiederum ihre Neigung mittels eines Hydraulikzylinders über den Gelenkpunkt 15' erfahren, nach oben und nach vorne gefahren. Das teleskopierbare Innenrohr 21' wird mittels einem Hydraulikzylinder aus- oder ein gefahren.
Anschließend wird durch den freien Raum, der links und rechts außen angebrachten Teleskopärme, von vorne das Fahrzeug F rückwärts hin durchgeschoben bis es mit der Hinterachse die Mulde 13' erreicht hat. Bei angehobener Transportstellung, nimmt die Pritsche 16' eine über den Gelenkpunkt 20' geneigte Stellung ein. Die Teleskopärme werden über das Stützelement 22' gegen Verdrehung und Absenkung gesichert.

Gemäß Fig. 17 kann der Anhänger auch zum Transport zweier schwerer und hoher Nutzfahrzeuge B' eingestellt werden. Das Laden und transportieren solcher Fahrzeuge basiert Analog zu Fig. 15 wobei das teleskopierbare Innenrohr nicht so weit ausgefahren werden muß um die gewünschte Stellung des hinteren zu ladenden Fahrzeuges B zu erreichen.
Die beiden den Lastzug bildenden Fahrzeuge können auch für den Transport gewöhnlichen Ladegutes oder anderer Fahrzeuge dieser Gattung, insbesondere Landmaschinen, Militär- und Sonderfahrzeuge verwendet werden.

Die Erfindung betrifft somit einen Lastzug zum Transport von Fahrzeugen, insbesondere von leichten, mittleren und schweren Nutzfahrzeugen, bei dem sowohl der Zugwagen wie auch der Anhänger hydraulische schwenk- und neigbare wie auch verlängerbare Pritschenelemente besitzen. Diese Pritschenelemente dienen zum einen als Rampe zum Laden des Transportgutes und zum anderen zum tragen der zu transportierenden Fahrzeuge in angehobener Stellung, wobei dann ein Zwischenraum, zwischen dem oberen geneigtem zu transportierenden Fahrzeug und dem unteren Pritschenelement entsteht, um ein zweites oder anderes Ladegut unter zu bringen, dadurch gekennzeichnet, dass ein Zugwagen (1') mit einer dritten Achse verwendet wird, dem nach der letzten Achse der Rahmen (2') nach unten versetzt wird um das hintere Pritschenelement (3') über Zylinder nach unten zu bewegen, sein bewegliches Pritschenteil (5') zwischen Fahrerhaus und dem hinteren Pritschenelement über zwei nach dem Fahrerhaus angeordneten Hubspindelsäulen (4') und zwei hintern Hubzylindern (6') in Höhe und Neigung verstellbar ist und gleichzeitig in der Länge, per Zylinder, über das Fahrerhaus, in angehobener Stellung, verlängerbar, wie auch das Pritschenelement über einen Zylinder und einer Ausschubpritsche (7 und (8') nach hinten Verlängerbar ist. Das der Anhänger mit einer besonders tiefen Rahmengestaltung (11'), bei gleichzeitiger optimaler Achsanordnung, um die höchst zulässigen Achslasten nicht zu überschreiten, es ermöglicht den Abstand, der einzelnen unteren Pritschenelmente (12' und 18'), zum Boden auf ein Minimum zu reduzieren und damit das Höhenvolumen der zu transportierenden Last zu vergrößern. Des weiteren ist das obere Pritschenelement (16') des Anhängers über zwei teleskopierbare, außen liegende Hubärme (14') in Länge und Neigung über Zylinder verstellbar.

Bevorzugt ist vorgesehen, dass die Zugmaschine (1') nach der letzten Achse ein nach unten gezogenen Rahmen (2') hat, damit die Ladung über das Pritschenelement (3') so weit wie möglich abgesenkt werden kann. Somit ist es möglich die volle Höhe des Ladevolumens auszunutzen und schwere und gleichzeitig hohe Fahrzeuge ohne Gewichts- und Höhenüberschreitung zu transportieren.

Bevorzugt ist vorgesehen, dass die Anordnung der Teleskophubärme (14') in Verbindung mit dem Pritschenelement (16') und den Teleskopinnenrohren (21'), am Anhängerrahmen so angebracht sind, dass es ermöglicht wird den kompletten zur Verfugung stehenden Laderaum auszunutzen, dass sowohl schwere-hohe Nutzfahrzeuge wie auch lange-mittelschwere, kurze-leichte und leichte-hohe Nutzfahrzeuge in Kombination geladen werden können ohne die höchstzulässige Transportlänge und Transporthöhe zu überschreiten.

Weiter bevorzugt ist vorgesehen, dass der Rahmen (11')des Anhängers über den Achsen sehr abgeflacht ist und somit es ermöglicht wird zwischen der ersten und der zweiten Achse eine Mulde (13') zu montieren, die eine Hinterachse eines zu transportierenden Fahrzeuges unterschiedlicher Höhe aufnehmen kann.

### Bezugszeichenliste

- 1: Zugmaschine
- 2: Rahmen
- 3: Führerhaus
- 4: Vorderachse
- 5: Hinterachse
- 6: Vorlaufachse
- 7: vorderes Pritschenelement
- 8: ortsfestes Pritschenelement
- 9: Heckbühne
- 10: Heckrahmenabschnitt
- 11: Fahrzeuglängsrichtung, Fahrtrichtung, Anhängerlängsrichtung
- 12: Fahrzeughochrichtung
- a: Maß
- 13: vorderes Ende
- 14: Vertikalrichtung
- 15: Gelenkeinrichtung
- 16: Achse
- 17: Einrichtung
- 18: Doppelpfeil
- 20: hinteres freies Ende
- 21: hinteres freies Ende
- 22: Kupplungseinrichtung
- 23: Pfeilrichtung
- 24: Hydraulikzylinder
- 30: vorderes freies Ende
- 31: hinteres freies Ende
- 32: Vertikalrichtung
- 33: Spindelhubeinrichtung
- 34: Gelenkbolzen
- 35: Doppelpfeilrichtung
- 36: Hydraulikzylinder
- 37: vordere Ausschubpritsche
- 37a: Doppelpfeilrichtung
- 38: hintere Ausschubpritsche
- 38a: Doppelpfeilrichtung
- 40: Zwischenraum
- 50: Anhänger
- 51: Rahmen
- 52: vordere Radachse
- 53: mittlere Radachse
- 54: hintere Radachse
- 55: erstes Pritschenelement
- 56: Radachse
- 57: vorderes Ende
- 58: Teleskophubarm
- 59: hinteres Ende
- 60: Schwenkachse
- 61: Doppelpfeilrichtung
- 62: Teleskopaußenrohr
- 63: Teleskopinnenrohr
- 64: Teleskophubeinrichtung
- 65: Schwenkgelenkeinrichtung
- 66: Stützeinrichtung
- d: Abstand
- 67: Mulde
- 68: Deichsel
- 69: zweites Pritschenelement
- 70: hinteres Ende
- 71: Schwenkachse
- 72: Doppelpfeilrichtung
- 73: vorderes freies Ende
- 74: vorderer Rahmenbereich
- 75: Kupplungselement
- 76: heckseitiges Ende
- 77: Auffahrrampe
- 78: Schwenkachse
- 79: Doppelpfeilrichtung
- 80: Freiraum
- N1: Rahmenniveau
- Ü: Überhang
- I: Nutzfahrzeug
- IIa: Nutzfahrzeug
- IIb: Nutzfahrzeug
- IIIa: Nutzfahrzeug
- IIIb: Nutzfahrzeug
- IV: Nutzfahrzeug
- Va: Nutzfahrzeug
- Vb: Nutzfahrzeug
- VI: Nutzfahrzeug
- VIIa: Nutzfahrzeug
- VIIb: Nutzfahrzeug

## Patentansprüche

1. Zugmaschine für einen Lastzug zum Transport von Fahrzeugen mit einem Rahmen (2) zumindest einem ersten relativ zum Rahmen (2) verlagerbaren vorderen Pritschenelement (7) und zumindest einem zweiten bezüglich der Zugmaschine (1) ortsfesten Pritschenelement (8) **dadurch gekennzeichnet, dass** eine relativ zum Rahmen (2) verlagerbare Heckbühne (9) vorhanden ist, welche einem Heckrahmenabschnitt (10) der Zugmaschine (1) zugeordnet ist, wobei der Heckrahmenabschnitt (10) in Fahrtrichtung (11) gesehen in einem Bereich hinter einer hintersten (letzten) Achse (5) der Zugmaschine (1) nach unten versetzt angeordnet ist.

2. Zugmaschine nach Anspruch 1, **dadurch gekennzeichnet, dass** die Heckbühne (9) ein in Fahrtrichtung (11) nach vorne weisendes Ende (13) besitzt, mit dem die Heckbühne (9) relativ zur Zugmaschine (1) linear, insbesondere im Wesentlichen vertikal linear relativ zur Zugmaschine (1) verlagerbar ist.

3. Zugmaschine nach Anspruch 1 und/oder 2, **dadurch gekennzeichnet, dass** die Heckbühne (9) im Bereich ihres vorderen Endes (13) um eine Achse (16) parallel zu einer Fahrzeugquerrichtung der Zugmaschine (1) schwenkbar verlagerbar ist.

4. Zugmaschine nach einem der vorangegangenen Ansprüche, **dadurch gekennzeichnet, dass** ein freies (hinteres) Ende (20) der Heckbühne (9) in etwa mit einem hintersten Ende (21) des nach unten versetzten Heckrahmenabschnittes (10) fluchtet.

5. Zugmaschine nach einem der vorangegangenen Ansprüche, **dadurch gekennzeichnet, dass** in einer vertikal obersten Horizontalstellung der Heckbühne (9) diese in etwa mit dem ortsfesten Pritschenelement (8) in Fahrzeuglängsrichtung (11) fluchtet.

6. Zugmaschine nach einem der vorangegangenen Ansprüche, **dadurch gekennzeichnet, dass** in einer vertikal untersten horizontalen Stellung der Heckbühne (9) diese auf einem Teilbereich des nach unten versetzt angeordneten Heckrahmenabschnitts (10) aufliegt oder unterhalb des Teilbereichs angeordnet ist.

7. Zugmaschine nach einem der vorangegangenen Ansprüche, **dadurch gekennzeichnet, dass** die Heckbühne (9) derart relativ zur Zugmaschine (1) um die Schwenkachse (16) verschwenkbar ist, dass das freie Ende (21) der Heckbühne (9) in einer Fahrzeughochrichtung (12) oberhalb oder unterhalb der Schwenkachse (16) der Heckbühne (9) angeordnet ist, d.h. um die Schwenkachse (16) aus einer horizontalen Ausrichtung der Heckbühne (9) sowohl nach oben als auch nach unten verschwenkbar verlagerbar ist.

8. Zugmaschine nach einem der vorangegangenen Ansprüche, **dadurch gekennzeichnet, dass** eine Einrichtung (17) zum linearen Verlagern des vorderen Endes (13) der Heckbühne (9) ein Hydraulikzylinder oder eine Spindelhubeinrichtung ist.

9. Zugmaschine nach einem der vorangegangenen Ansprüche, **dadurch gekennzeichnet, dass** eine Einrichtung zum Verschwenken der Heckbühne (9) um die Schwenkachse (13) ein Hydraulikzylinder (24) ist, welcher einendig mit der Heckbühne (9) und anderendig mit dem Rahmen (2) der Zugmaschine (1)gekuppelt ist.

10. Zugmaschine nach einem der vorangegangenen Ansprüche, **dadurch gekennzeichnet, dass** das erste relativ zum Rahmen (2) verlagerbare vordere Pritschenelement (7) ein vorderes Ende (30) aufweist, welches mit einer Spindelhubeinrichtung (33) gekuppelt ist, so dass das vordere Ende (30) des vorderen Pritschenelements (7) linear, insbesondere linear vertikal relativ zur Zugmaschine (1)verlagerbar ist.

11. Zugmaschine nach einem der vorangegangenen Ansprüche, **dadurch gekennzeichnet, dass** im Bereich des vorderen Endes (30) des vorderen Pritschenelements (7) eine Gelenkeinrichtung (34) mit einer zweiten Schwenkachse vorgesehen ist, die parallel zur Fahrzeugquerrichtung der Zugmaschine (1) verläuft, so dass das vordere Pritschenelement (7) um die zweite Schwenkachse in einer Doppelpfeilrichtung (35) nach oben und nach unten verschwenkbar ist.

12. Zugmaschine nach einem der vorangegangenen Ansprüche, **dadurch gekennzeichnet, dass** sich das vordere Pritschenelement (7) vom vorderen Ende (30) in Fahrzeuglängsrichtung (11) nach hinten erstreckt und ein freies hinteres Ende (31) aufweist.

13. Zugmaschine nach einem der vorangegangenen Ansprüche, **dadurch gekennzeichnet, dass** eine Einrichtung zum schwenkbaren Verlagern des vorderen Pritschenelements (7) vorhanden ist, wobei die Einrichtung insbesondere ein Hydraulikzylinder (36) ist, welcher einendig mit dem Rahmen (2) der Zugmaschine (1) gekuppelt ist und anderendig mit einem in Fahrzeuglängsrichtung (11) gesehen hinteren Bereich des vorderen Pritschenelements (7) gekuppelt ist.

14. Zugmaschine nach einem der vorangegangenen Ansprüche, **dadurch gekennzeichnet, dass** das vordere Pritschenelement (7) in Fahrzeuglängsrichtung (11) gesehen zumindest an einem Ende (30; 31) eine Ausschubpritsche (30; 31) besitzt, welche das vordere Pritschenelement (7) hinsichtlich seiner Längserstreckung verlängernd antreibbar verfahrbar ist.

15. Zugmaschine nach einem der vorangegangenen Ansprüche, **dadurch gekennzeichnet, dass** das erste verlagerbare Pritschenelement (7) in einer frontendig und heckendig abgesenkten Stellung in etwa auf dem Niveau (N1) des fahrzeugfesten Pritschenelements verläuft.

16. Zugmaschine nach einem der vorangegangenen Ansprüche, **dadurch gekennzeichnet, dass** das vordere Pritschenelement (7) und die Heckbühne (9) in zumindest einer Verlagerungsstellung in einer gemeinsamen Ebene liegen und somit eine Ladeebene bilden.

17. Zugmaschine nach einem der vorangegangenen Ansprüche, **dadurch gekennzeichnet, dass** das vordere Pritschenelement (7) und die Heckbühne (9) unabhängig voneinander verlagerbar sind.

18. Zugmaschine nach einem der vorangegangenen Ansprüche, **dadurch gekennzeichnet, dass** das vordere Pritschenelement (7) in eine in Fahrzeugrichtung (11) der Zugmaschine (1) gesehen ansteigende oder horizontale oder abfallende Neigung verlagerbar ist.

19. Zugmaschine nach einem der vorangegangenen Ansprüche, **dadurch gekennzeichnet, dass** das vordere Pritschenelement (7) sowohl am vorderen Ende (30) als auch am hinteren Ende (31) jeweils eine Ausschubpritsche (37, 38) aufweist, welche unabhängig voneinander einfahrbar und ausfahrbar sind.

20. Anhänger für einen Lastzug zum Transport von Fahrzeugen mit einem Rahmen (51) und zumindest einem relativ zum Rahmen (51) verlagerbaren ersten Pritschenelement (55) zur Aufnahme zumindest eines Rades (56) eines zu transportierenden Fahrzeugs, **dadurch gekennzeichnet, dass** das Pritschenelement (55) an einem in einer Fahrtrichtung (11) vorderen Ende (57) zumindest eines Teleskophubarmes (58) angeordnet ist und der zumindest eine Teleskophubarm (58) mit einem in Fahrtrichtung (11) hinteren Ende (59) um eine Schwenkachse (60) quer zur Fahrtrichtung (11) relativ zum Rahmen (51) schwenkbar angelenkt ist.

21. Anhänger nach Anspruch 20, **dadurch gekennzeichnet, dass** die Schwenkachse (60) des Teleskophubarmes (58) in der Fahrtrichtung (11) hinter einer hintersten Anhängerradachse (54) angeordnet ist.

22. Anhänger nach einem der Ansprüche 20 und 21, **dadurch gekennzeichnet, dass** der Teleskophubarm (58) mittels eines Hydraulikzylinders um die Schwenkachse (60) schwenkbar antreibbar ist.

23. Anhänger nach einem der Ansprüche 20 bis 22, **dadurch gekennzeichnet, dass** der Teleskophubarm (58) ein Teleskopaußenrohr (62) und ein Teleskopinnenrohr (63) besitzt, welche zueinander mittels zumindest eines Hydraulikzylinders linear in einer Teleskophubrichtung (64) verlagerbar sind.

24. Anhänger nach einem der Ansprüche 20 bis 23, **dadurch gekennzeichnet, dass** das zumindest eine Pritschenelement (55) mittels eines Schwenkgelenks (65) am freien vorderen Ende (57) des Teleskophubarmes (58) angebunden ist.

25. Anhänger nach einem der Ansprüche 20 bis 24, **dadurch gekennzeichnet, dass** ein Hydraulikzylinder vorgesehen ist, welcher einendig mit dem zumindest einem Pritschenelement (55) und anderendig mit dem Teleskophubarm (58) verbunden ist.

26. Anhänger nach einem der Ansprüche 20 bis 25, **dadurch gekennzeichnet, dass** der Teleskophubarm (58) ein Stützelement (66) aufweist, mittels dem der Teleskophubarm (58) in zumindest einer von einer abgesenkten Stellung des Teleskophubarmes (58) unterschiedlichen Stellung mechanisch formschlüssig bezüglich des Rahmens (51) des Anhängers (50) festlegbar ist.

27. Anhänger nach einem der Ansprüche 20 bis 26, **dadurch gekennzeichnet, dass** zumindest zwei Radachsen (52, 53) des Anhängers (50) in Fahrtrichtung (11) derart weit beabstandet voneinander angeordnet sind, dass zwischen den Radachsen (52, 53) eine Mulde (67) zur Aufnahme zumindest eines weiteren Rades eines weiteren zu transportierenden Fahrzeuges gebildet ist.

28. Anhänger nach einem der Ansprüche 20 bis 27, **dadurch gekennzeichnet, dass** der Teleskophubarm (58) und das zumindest eine Pritschenelement (55) in einer vollständig abgesenkten Stellung Oberseiten von Anhängerrädern zumindest teilweise überkragt, so dass der Bereich oberhalb der Anhängerräder von einem zu transportierenden Fahrzeug befahrbar ist.

29. Anhänger nach einem der Ansprüche 20 bis 28, **dadurch gekennzeichnet, dass** in einer vollständig abgesenkten Stellung des Pritschenelements (55) das Pritschenelement (55) die Mulde (67) überbrückt.

30. Anhänger nach einem der Ansprüche 20 bis 29, **dadurch gekennzeichnet, dass** ein zweites verlagerbares Pritschenelement (69) vorhanden ist, welches mit seinem in Fahrtrichtung (11) hinteren Ende (70) um eine dritte Schwenkachse (71) schwenkbar relativ zum Rahmen (51) des Anhängers (50) gelagert ist.

31. Anhänger nach einem der Ansprüche 20 bis 30, **dadurch gekennzeichnet, dass** das zweite Pritschenelement (69) sich vom hinteren Ende (70) in Fahrtrichtung (11) des Anhängers (50) nach vorne erstreckt und mit seinem freien vorderen Ende (73) auf und ab schwenkbar ist.

32. Anhänger nach einem der Ansprüche 20 bis 31, **dadurch gekennzeichnet, dass** das zweite Pritschenelement (69) in einer abgesenkten Stellung entgegen der Fahrtrichtung (11) des Anhängers (50) ansteigend angeordnet ist und zusammen mit einem vorderen Rahmenbereich (74) des Anhängers (50) eine befahrbare Bahn bildet.

33. Anhänger nach einem der Ansprüche 20 bis 32, **dadurch gekennzeichnet, dass** der Anhänger (50) eine starre Deichsel (68) mit einem Kupplungselement (75) zum Kuppeln des Anhängers (50) an eine Zugmaschine (1) aufweist, wobei die Deixel (68) im angekuppelten Zustand in Fahrtrichtung (11) in etwa mit einem abgesenkten Heckrahmenbereich (10) einer Zugmaschine (1) fluchtet.

34. Anhänger nach einem der Ansprüche 20 bis 33, **dadurch gekennzeichnet, dass** der Anhänger (50) an seinem heckseitigen Ende (76) eine Auffahrrampe (77) aufweist, welche schwenkbar am Anhängerheck (76) angelenkt ist und aus einer im Wesentlichen horizontalen Beladestellung in eine im Wesentlichen vertikale Verstaustellung schwenkbar ist.

35. Anhänger nach einem der Ansprüche 20 bis 34, **dadurch gekennzeichnet, dass** der vordere Rahmenbereich (74) des Anhängers (50), die zweite Pritscheneinrichtung (69) in abgesenkter Stellung, die erste Pritscheneinrichtung (55) in abgesenkter Stellung sowie der Teleskophubarm (58) in abgesenkter Stellung, ein hinterer Rahmenbereich (76) des Anhängers (50) sowie das Auffahrrampenelement (77) in seiner abgesenkten Stellung eine im Wesentlichen durchgehende von einem zu transportierenden Fahrzeug befahrbare Bahn bilden.

36. Lastzug zum Transport von Fahrzeugen mit einer Zugmaschine (1) nach einem oder mehreren der Ansprüche 1 bis 19 und einem Anhänger (50) nach einem oder mehreren der Ansprüche 20 bis 35.

37. Verfahren zum Beladen eines Anhängers mit leichten, mittleren oder schweren Nutzfahrzeugen zum Transport derselben, wobei zumindest ein erstes zu transportierendes Fahrzeug auf dem Anhänger angeordnet wird, **dadurch gekennzeichnet, dass** das erste auf dem Anhänger anzuordnende zu transportierende Nutzfahrzeug mit dessen Führerhaus in eine Fahrtrichtung des Anhängers weisend auf dem Anhänger angeordnet wird, wobei eine Vorderachse und eine Hinterachse des ersten zu transportierenden Nutzfahrzeuges in etwa auf einem gleichen horizontalen Niveau angeordnet werden und zumindest ein zweites zu transportierendes Nutzfahrzeug in Fahrtrichtung hinter dem ersten zu transportierenden Nutzfahrzeug auf dem Anhänger angeordnet wird, wobei das zweite zu transportierende Nutzfahrzeug entgegen der Fahrtrichtung auf dem Anhänger angeordnet wird und die Hinterachse des zweiten zu transportierenden Nutzfahrzeuges mittels einer Hubeinrichtung gegenüber der Vorderachse des zweiten zu transportierenden Fahrzeuges angehoben wird.

38. Verfahren nach Anspruch 37, **dadurch gekennzeichnet, dass** zuerst das heckseitig anzuhebende zu transportierende Nutzfahrzeug auf dem Anhänger angeordnet wird.

39. Verfahren nach einem der Ansprüche 37 oder 38, **dadurch gekennzeichnet, dass** das erste zu transportierende Nutzfahrzeug rückwärts fahrend von einer vorderen Stirnseite des Anhängers her auf diesen aufgefahren wird bis eine Hinterachse des ersten zu transportierenden Nutzfahrzeuges in eine geeignete Festlegungsvorrichtung, z. B. in einer Mulde aufliegt.
